# EUROPEAN PATENT APPLICATION

(11) **EP 4 761 350 A2**
(43) Date of publication of application: **17.06.2026**
(21) Application number: 26168990.5
(22) Date of filing: 31.05.2022
(51) Int. Cl.: H04W 28/24

(54) **HYBRID QUALITY OF SERVICE FLOW**

(30) Priority: 02.06.2021 EP 21177469
(62) Divisional of application: 22734169.0
(71) Applicant: Koninklijke Philips N.V., 5656 AE Eindhoven (NL)
(72) Inventor: SRINIVASAN, Nithin, Eindhoven (NL); FEHRENBACH, Thomas, Eindhoven (NL); WIRTH, Thomas, Eindhoven (NL); HELLGE, Cornelius, Eindhoven (NL); SCHIERL, Thomas, Eindhoven (NL)
(74) Representative: Philips Intellectual Property & Standards

(57) **Abstract**

An apparatus for a wireless communication network is described. The apparatus is to transmit a data packet to a destination in the wireless communication network via one or more relay devices using a first relaying scheme, like layer 2, L2, relaying, or using a second relaying scheme, like layer 3, L3, relaying. The apparatus is to map the data packet to a hybrid Quality of Service, QoS, flow between the apparatus and the destination, the hybrid QoS flow including QoS parameters for the first relaying scheme and for the second relaying scheme.

## Description

The present invention relates to the field of wireless communication systems or networks, more specifically to the field of relay devices, like sidelink relay devices, used to provide functionality to support connectivity between a transmitting entity and a receiving entity. Embodiments of the present invention concern a hybrid Quality of Service, QoS, flow for handing QoS requirements of different relaying schemes like layer 2, L2, and layer 3, L3, relaying, for relaying a data packet from the transmitting entity the receiving entity.

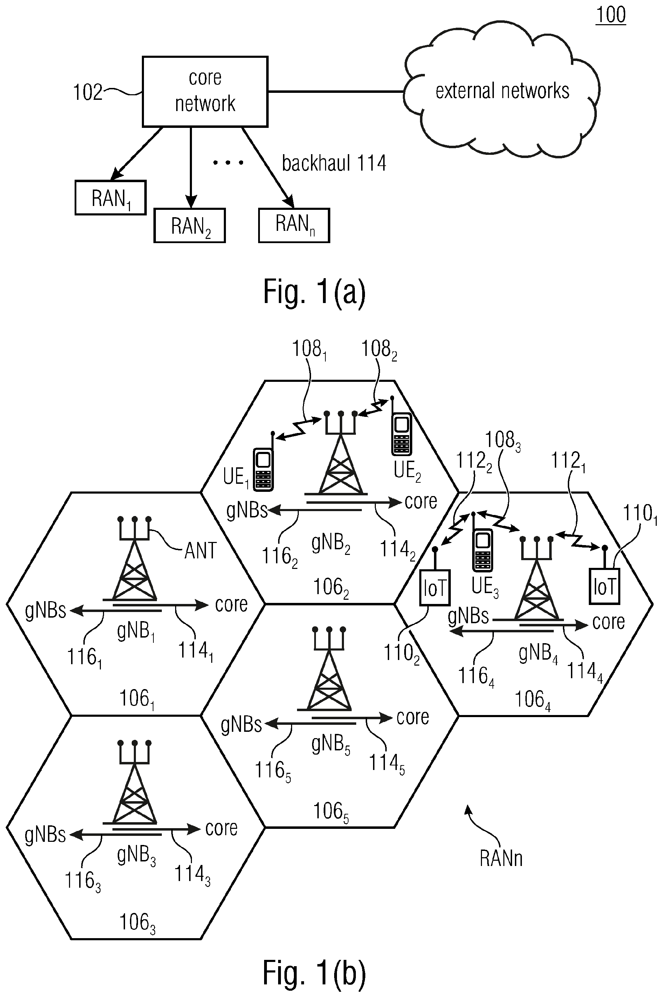

Fig. 1 is a schematic representation of an example of a terrestrial wireless network 100 including, as is shown in Fig. 1(a), the core network 102 and one or more radio access networks RAN₁, RAN₂, ...RAN_{N}. Fig. 1(b) is a schematic representation of an example of a radio access network RANₙ that may include one or more base stations gNB₁ to gNB₅, each serving a specific area surrounding the base station schematically represented by respective cells 106₁ to 106₅. The base stations are provided to serve users within a cell. The one or more base stations may serve users in licensed and/or unlicensed bands. The term base station, BS, refers to a gNB in 5G networks, an eNB in UMTS/LTE/LTE-A/ LTE-A Pro, or just a BS in other mobile communication standards. A user may be a stationary device or a mobile device. The wireless communication system may also be accessed by mobile or stationary loT devices which connect to a base station or to a user. The mobile or stationary devices may include physical devices, ground based vehicles, such as robots or cars, aerial vehicles, such as manned or unmanned aerial vehicles, UAVs, the latter also referred to as drones, buildings and other items or devices having embedded therein electronics, software, sensors, actuators, or the like as well as network connectivity that enables these devices to collect and exchange data across an existing network infrastructure. Fig. 1(b) shows an exemplary view of five cells, however, the RAN, may include more or less such cells, and RANₙ may also include only one base station. Fig. 1(b) shows two users UE₁ and UE₂, also referred to as user device or user equipment, that are in cell 106₂ and that are served by base station gNB₂. Another user UE₃ is shown in cell 106₄ which is served by base station gNB₄. The arrows 108₁, 108₂ and 108₃ schematically represent uplink/downlink connections for transmitting data from a user UE₁, UE₂ and UE₃ to the base stations gNB₂, gNB₄ or for transmitting data from the base stations gNB₂, gNB₄ to the users UE₁, UE₂, UE₃. This may be realized on licensed bands or on unlicensed bands.

Further, Fig. 1(b) shows two further devices 110₁ and 110₂ in cell 106₄, like loT devices, which may be stationary or mobile devices. The device 110₁ accesses the wireless communication system via the base station gNB₄ to receive and transmit data as schematically represented by arrow 112₁. The device 110₂ accesses the wireless communication system via the user UE₃ as is schematically represented by arrow 112₂. The respective base station gNB₁ to gNB₅ may be connected to the core network 102, e.g., via the S1 interface, via respective backhaul links 114₁ to 114₅, which are schematically represented in Fig. 1(b) by the arrows pointing to "core". The core network 102 may be connected to one or more external networks. The external network may be the Internet, or a private network, such as an Intranet or any other type of campus networks, e.g., a private WiFi communication system or a 4G or 5G mobile communication system. Further, some or all of the respective base station gNB₁ to gNB₅ may be connected, e.g., via the S1 or X2 interface or the XN interface in NR, with each other via respective backhaul links 116₁ to 116₅, which are schematically represented in Fig. 1(b) by the arrows pointing to "gNBs". A sidelink channel allows direct communication between UEs, also referred to as device-to-device, D2D, communication. The sidelink interface in 3GPP is named PC5.

For data transmission a physical resource grid may be used. The physical resource grid may comprise a set of resource elements to which various physical channels and physical signals are mapped. For example, the physical channels may include the physical downlink, uplink and sidelink shared channels, PDSCH, PUSCH, PSSCH, carrying user specific data, also referred to as downlink, uplink and sidelink payload data, the physical broadcast channel, PBCH, and the physical sidelink broadcast channel, PSBCH, carrying for example a master information block, MIB, and one or more system information blocks, SIBs, one or more sidelink information blocks, SLIBs, if supported, the physical downlink, uplink and sidelink control channels, PDCCH, PUCCH, PSSCH, carrying for example the downlink control information, DCI, the uplink control information, UCI, and the sidelink control information, SCI, and physical sidelink feedback channels, PSFCH, carrying PC5 feedback responses. The sidelink interface may support a 2-stage SCI which refers to a first control region containing some parts of the SCI, also referred to as the 1^{st} stage SCI, and optionally, a second control region which contains a second part of control information, also referred to as the 2^{nd} stage SCI.

For the uplink, the physical channels may further include the physical random-access channel, PRACH or RACH, used by UEs for accessing the network once a UE synchronized and obtained the MIB and SIB. The physical signals may comprise reference signals or symbols, RS, synchronization signals and the like. The resource grid may comprise a frame or radio frame having a certain duration in the time domain and having a given bandwidth in the frequency domain. The frame may have a certain number of subframes of a predefined length, e.g., 1ms. Each subframe may include one or more slots of 12 or 14 OFDM symbols depending on the cyclic prefix, CP, length. A frame may also have a smaller number of OFDM symbols, e.g., when utilizing shortened transmission time intervals, sTTI, or a mini-slot/non-slot-based frame structure comprising just a few OFDM symbols.

The wireless communication system may be any single-tone or multicarrier system using frequency-division multiplexing, like the orthogonal frequency-division multiplexing, OFDM, system, the orthogonal frequency-division multiple access, OFDMA, system, or any other Inverse Fast Fourier Transform, IFFT, based signal with or without Cyclic Prefix, CP, e.g., Discrete Fourier Transform-spread-OFDM, DFT-s-OFDM. Other waveforms, like non-orthogonal waveforms for multiple access, e.g., filter-bank multicarrier, FBMC, generalized frequency division multiplexing, GFDM, or universal filtered multi carrier, UFMC, may be used. The wireless communication system may operate, e.g., in accordance with the LTE-Advanced pro standard, or the 5G or NR, New Radio, standard, or the NR-U, New Radio Unlicensed, standard.

The wireless network or communication system depicted in Fig. 1 may be a heterogeneous network having distinct overlaid networks, e.g., a network of macro cells with each macro cell including a macro base station, like base station gNB₁ to gNB₅, and a network of small cell base stations, not shown in Fig. 1, like femto or pico base stations. In addition to the above-described terrestrial wireless network also non-terrestrial wireless communication networks, NTN, exist including spaceborne transceivers, like satellites, and/or airborne transceivers, like unmanned aircraft systems. The non-terrestrial wireless communication network or system may operate in a similar way as the terrestrial system described above with reference to Fig. 1, for example in accordance with the LTE-Advanced Pro standard or the 5G or NR, new radio, standard.

In mobile communication networks, for example in a network like that described above with reference to Fig. 1, like a LTE or 5G/NR network, there may be UEs that communicate directly with each other over one or more sidelink, SL, channels, e.g., using the PC5/PC3 interface or WiFi direct. UEs that communicate directly with each other over the sidelink may include vehicles communicating directly with other vehicles, V2V communication, vehicles communicating with other entities of the wireless communication network, V2X communication, for example roadside units, RSUs, roadside entities, like traffic lights, traffic signs, or pedestrians. An RSU may have a functionality of a BS or of a UE, depending on the specific network configuration. Other UEs may not be vehicular related UEs and may comprise any of the above-mentioned devices. Such devices may also communicate directly with each other, D2D communication, using the SL channels.

When considering two UEs directly communicating with each other over the sidelink, both UEs may be served by the same base station so that the base station may provide sidelink resource allocation configuration or assistance for the UEs. For example, both UEs may be within the coverage area of a base station, like one of the base stations depicted in Fig. 1. This is referred to as an "in-coverage" scenario. Another scenario is referred to as an "out-of-coverage" scenario. It is noted that "out-of-coverage" does not mean that the two UEs are necessarily outside one of the cells depicted in Fig. 1, rather, it means that these UEs
- may not be connected to a base station, for example, they are not in an RRC connected state, so that the UEs do not receive from the base station any sidelink resource allocation configuration or assistance, and/or
- may be connected to the base station, but, for one or more reasons, the base station may not provide sidelink resource allocation configuration or assistance for the UEs, and/or
- may be connected to the base station that may not support NR V2X services, e.g., GSM, UMTS, LTE base stations.

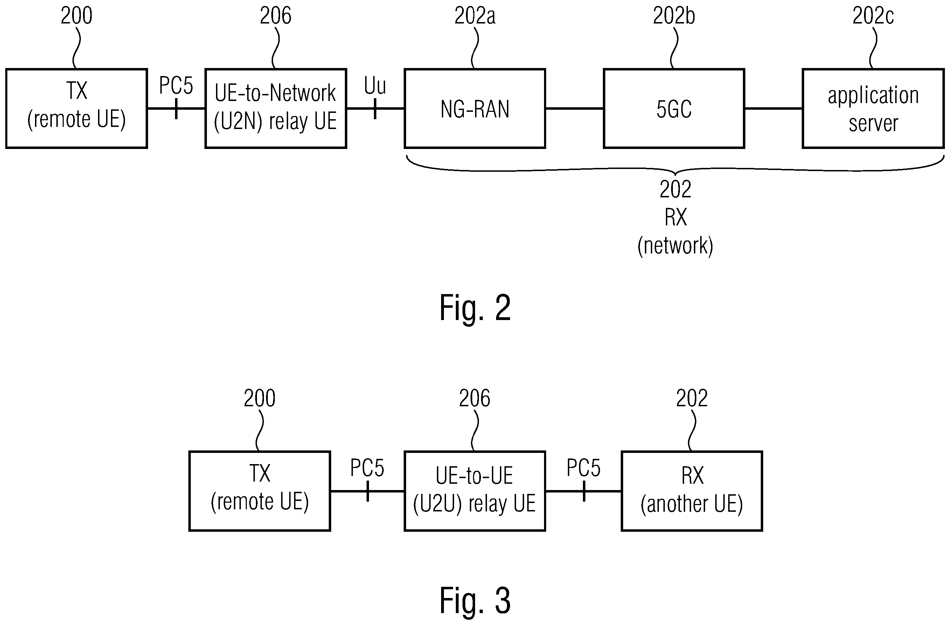

When considering two UEs directly communicating with each other over the sidelink, e.g., using the PC5/PC3 interface, one of the UEs may also be connected with a BS, and may relay information from the BS to the other UE via the sidelink interface and vice-versa. The relaying may be performed in the same frequency band, in-band-relay, or another frequency band, out-of-band relay, may be used. In the first case, communication on the Uu and on the sidelink may be decoupled using different time slots as in time division duplex, TDD, systems. Relay devices or relay nodes may be employed to solve performance issues, like a reduced data rate, a weaker signal and higher interference as it may be encountered on the radio coverage edges of a cell of a base station. The relay node may extract data from a received signal, apply noise correction and retransmit a new signal on its own. Rather than only repeating the signal, the relay node also increases the signal quality. In the 3GPP specifications for 4G, a UE-to-Network relay has been specified. Fig. 2 illustrates a scenario where a relay UE operates as a UE-to-Network relay. The relay device or relay node mentioned above may be a user equipment, UE, and, in the following, is also referred to a relay UE. Fig. 2 illustrates a UE 200 that is to connect to a destination 202, e.g., to an entity of the access network 202a, like a gNB, or to an entity of the core network 202b or to an application server 202c. The end-to-end communication between the UE 200, that is also referred to as the remote UE, and the destination uses a relay UE 206 that provides functionality to support connectivity to the destination in the core network 202 for the remote UE 200. The remote UE 200 and the relay UE 206 may communicate using the PC5 interface, and the relay UE 206 and the access network 202a may communicate using interface between user equipment and base station, also referred to as the Uu interface.

In NR or 5G, in addition to the UE-to-Network relay, also a UE-to-UE relay is supported. In such a scenario, the destination 202 is another UE. Fig. 3 illustrates a scenario where the relay is a UE-to-UE relay 206. The remote UE 200 is to connect to the other UE 202, and the relay UE 206 provides functionality to support connectivity to the destination UE 202, for the remote UE 200. The remote UE 200 and the relay UE may communicate using the PC5 interface, and the relay UE and the other UE 202 may communicate using also the PC5 interface.

It is noted that the information in the above section is only for enhancing the understanding of the background of the invention and, therefore, it may contain information that does not form prior art that is already known to a person of ordinary skill in the art.

Starting from the above, there may be a need for improvements or enhancements of relaying transmissions in a wireless communication system or network.

Embodiments of the present invention are now described in further detail with reference to the accompanying drawings:
- Fig. 1: is a schematic representation of an example of a terrestrial wireless network;
- Fig. 2: illustrates a scenario where a relay UE operates as a UE-to-Network relay;
- Fig. 3: illustrates a scenario where the relay is a UE-to-UE relay;
- Fig. 4: illustrates a control plane protocol stack for a UE-to-Network relay;
- Fig. 5: illustrates a user plane protocol stack of the UE-to-UE network relay;
- Fig. 6: illustrates an example of the protocol stack for a communication within the wireless communication system;
- Fig. 7: illustrates RRC information elements, IEs, for configuring a SDAP layer, wherein Fig. 7(a) illustrates IEs for configuring the SDAP layer for the Uu interface and Fig. 7(b) and Fig. 7(c) illustrate IEs for configuring or setting up the SDAP layer for the sidelink interface, the PC5;
- Fig. 8: illustrates a conventional approach for SDAP layer mapping, wherein Fig. 8(a) illustrates a conventional SDAP mapping for U2N relaying, Fig. 8(b) illustrates a conventional SDAP mapping for U2U relaying, and Fig. 8(c) illustrates a QoS flow configuration over a relay path for L2 and L3 relaying;
- Fig. 9: is a schematic representation of a wireless communication system including a transmitter, like a base station, one or more receivers, like user devices, UEs, and one or more relay UEs for implementing embodiments of the present invention;
- Fig. 10: illustrates an embodiment of an apparatus in accordance with the teaching of the present invention;
- Fig. 11: illustrates an embodiment of the present invention implementing a QoS flow over a relay path including the inventive hybrid QoS flow over a single hop;
- Fig. 12: illustrates a mapping the hybrid QoS flow to respective radio bearers in accordance with an embodiment of the present invention;
- Fig. 13: illustrates embodiments in accordance with which a hybrid flow enables a remote UE to be connected to L2 and L3 relays concurrently;
- Fig. 14: illustrates a dual connectivity embodiment in accordance with which a remote UE implementing a hybrid QoS flow in accordance with embodiments of the present inventions is connected to a destination via a direct link and via a relay;
- Fig. 15: illustrates embodiments of the present invention allowing the QoS bundling of QoS flows from a plurality of UEs to a destination;
- Fig. 16: illustrates an embodiment of the present invention using N relays for a communication between a transmitting entity and a receiving entity;
- Fig. 17: illustrates an embodiment of the present invention employing N=2 relay layers for the end-to-end communication between a transmitting entity and a receiving entity; and
- Fig. 18: illustrates an example of a computer system on which units or modules as well as the steps of the methods described in accordance with the inventive approach may execute.

Embodiments of the present invention are now described in more detail with reference to the accompanying drawings, in which the same or similar elements have the same reference signs assigned.

In a wireless communication system or network, like the one described above with reference to Fig. 1, relay devices or relay nodes may be employed to solve performance issues, like a reduced data rate, a weaker signal and higher interference as it may be encountered on the radio coverage edges of a cell of a base station. The relay node may simply repeat and forward a received signal or transmission. In other examples, the relay node may extract data from a received signal or transmission, apply noise correction and send a new signal or a new transmission on its own. Rather than only repeating the signal, the relay node may also improve the signal quality.

For example, a user device, UE, also referred to as a remote user device, UE, being out of coverage, OOC, i.e., outside the coverage of any access network, like the RAN in Fig. 1, may enlist the services of another UE, the so-called relaying entity, also referred to as relay UE or relay node, which is in-coverage of the access network so as to obtain the services of the access network to which the relay UE is connected. The connection between the remote UE and the relay UE may be over a sidelink connection, using, for example, PC5 sidelink resources. The remote UE is not necessarily out of coverage, but may also enlist the services of the relay UE also when being in coverage, for example, for avoiding performance degradations that may be encountered on radio coverage edges of a cell of an access point of the access network, like the base station. Also, the remote UE may connect to the access network via two or more relay UEs, what is also referred to as a multi-hop scenario in which more than one relay UE from a chain to connect the remote UE to its destination, which may be another user device or a network entity, for example, a RAN entity, like a base station or a gNB. In a multi-hop scenario, connecting the remote UE to the access network only the relay UE which immediately connects to the access network actually needs to be in coverage of an access point of the access network.

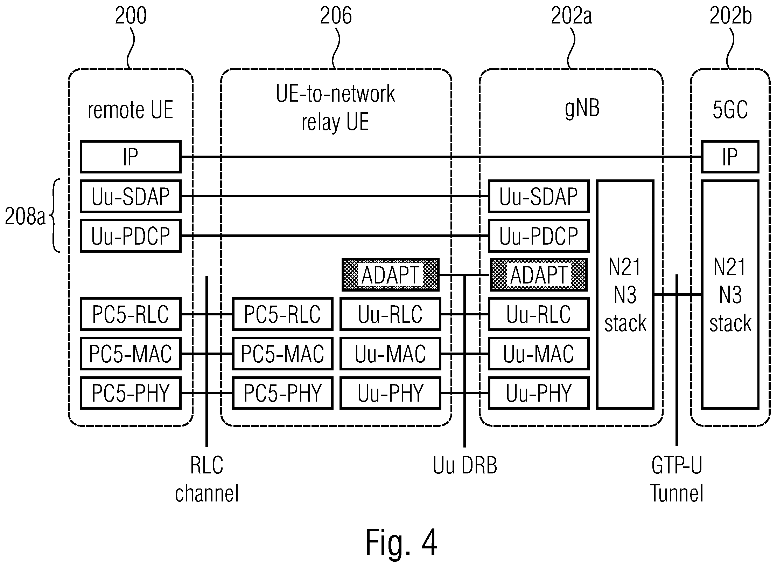

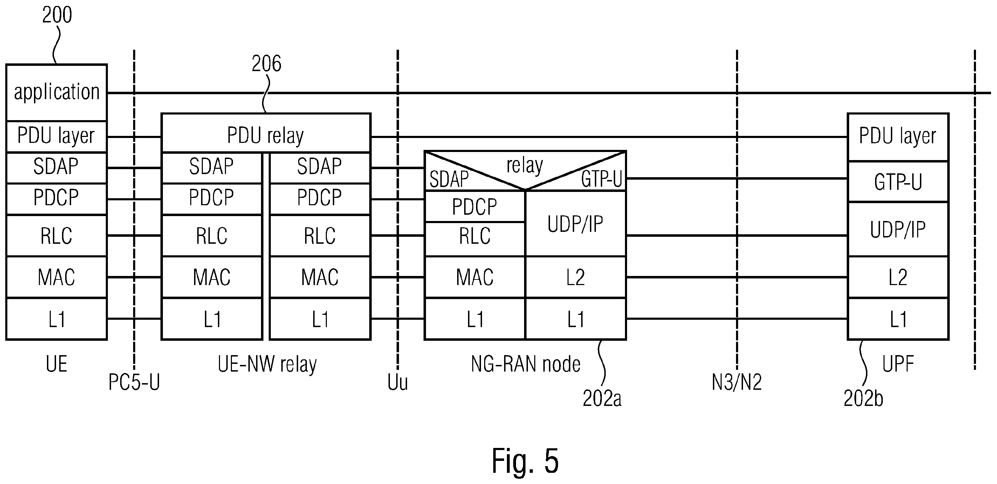

3GPP provides two solutions or schemes for the relaying function, namely the so-called layer-2, L2, relaying and the layer-3, L3, relaying. Fig. 4 illustrates the protocol stock for L2 relaying, and Fig. 5 illustrates the protocol stack for L3 relaying. In Fig. 4 and in Fig. 5, UE-to-network scenarios are illustrated, in which the destination is a network entity. As is illustrated, the remote UE 200 is connected via the PC5 interface to the L2 or L3 relay 206 which, in turn, is connected to the network 202a, for example, to the radio access network via the Uu interface. The radio access network in turn is connected to the core network via the N2/N3 network. In L2 relaying, see Fig. 4, the higher layers 208a of the remote UE terminate at the radio access network, RAN, and at the core network, CN, thereby providing a structure for an end-to-end management of the system. In L3 relaying, see Fig. 5, all layers 208b of the remote UE terminate at each hop at the relay UE, thereby providing a structure for a hop-by-hop management of the system.

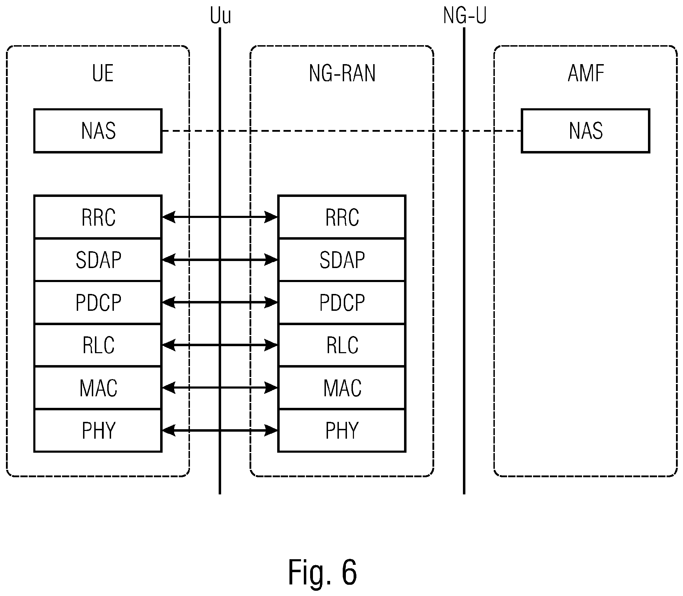

Moreover, in a wireless communication system as described above, in accordance with the 3GPP standards, a Quality of Service, QoS, flow is defined as the lowest level granularity within the system. The QoS flow is uniquely identified by the use of a QoS flow identifier, QFI, and the QoS flow is setup to handle different user plane data packets having different requirements, like different requirements regarding a delay and a reliability. The QoS flow is characterized by a set of parameters that may be configured to deal with different traffic requirements. Fig. 6 illustrates an example of the protocol stack for a communication within the wireless communication system. Fig. 6 illustrates the user device, UE, that is connected to the new generation radio access network, NG-RAN, for example to a base station thereof, via the Uu interface. The NG-RAN, in turn, is connected to the core network, CN, for example via the NG-U interface. The protocol stack may be split into two layers, namely the Non-Access Stratum, NAS, layer, and the Access Stratum, AS, layer. As is illustrated in Fig. 6, the NAS layer of the UE terminates at the CN, for example at the Access and Mobility Function, AMF. The AS layer includes the Physical Layer, PHY, the Medium Access Control Layer, MAC, the Radio Link Control, RLC, layer, the Packet Data Control Protocol, PDCP, layer, the Service Data Adaption Protocol, SDAP, layer, and the Radio Resource Control, RRC, layer. The AS layer, which is below the NAS layer, terminates at the Access Network, AN, or Radio Access Network, RAN. The NAS layer, at the UE, which may be set up by the CN, deals directly with the packets to and/or from an application, and the packet, like a data packet including user data or control data, is then mapped, in accordance with a QoS flow associated with the packet, to the corresponding AS layer resources for transmission to the RAN. The RAN then performs a re-mapping to the corresponding QoS flow at the CN.

The QoS flow is a logical entity set up between the UE and the CN. Within the CN, the user plane data between the RAN and the user plane function, UPF, is forwarded over the QoS flows. Packets from an application are filtered into a QoS flow and are then mapped to the access network resources which, in turn, carry the packet to the RAN where they are re-mapped into the QoS flow. The uplink, UL, and downlink, DL, packets are mapped to corresponding QoS flows based on certain rules which determine the treatment of a packet in the network. For example, a QoS flow may be setup to cater to high reliability and/or low latency. Dependent on a scenario, multiple QoS flows may be setup and separate flows, i.e., at least two flows, may be needed to cater traffic over the sidelink interface, like the PC5 interface, and over the interface between the UE and the base station, the Uu interface. The QoS flow is identified using the QFI, and each QFI may be associated with a certain set of QoS parameters and characteristics as shown in the table below illustrating different QoS parameters/characteristics for a sidelink communication and for a Uu communication.

| | | | |
|---|---|---|---|
| QoS Flow of Uu Communication QFI is associated with the following: | | QoS Flow of Sidelink (PC5) Communication QFI is associated with the following: | |
| ➢ 5G QoS Parameters | | ➢ PC5 QoS Parameters: | |
| | ∘ 5QI: 5G QoS characteristics | | ∘ PQI: special 5QI |
| | ∘ ARP: Allocation and retention priority | | ∘ PC5 Flow Bit Rates |
| | | | ∘ PC5 Link aggregated bit rates |
| | ∘ RQA: Reflective QoS Attribute | | ∘ Range |
| ➢ 5QI QoS characteristics | | ➢ 5QI QoS characteristics | |
| | ∘ Resource type | | o Resource type |
| | ∘ Priority level | | o Priority level |
| | ∘ Packet delay budget | | o Packet delay budget |
| | ∘ Packet error rate | | o Packet error rate |
| | o Default maximum data burst volume | | o Default maximum data burst volume |
| | | | o Default averaging window |
| | o Default averaging window | | |

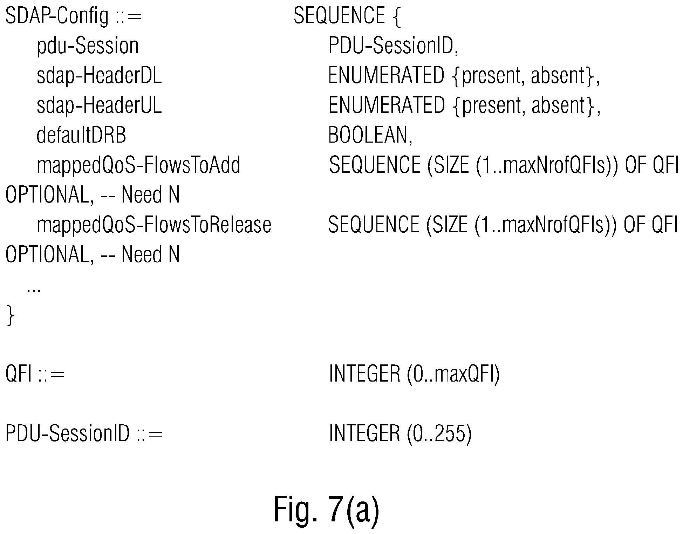

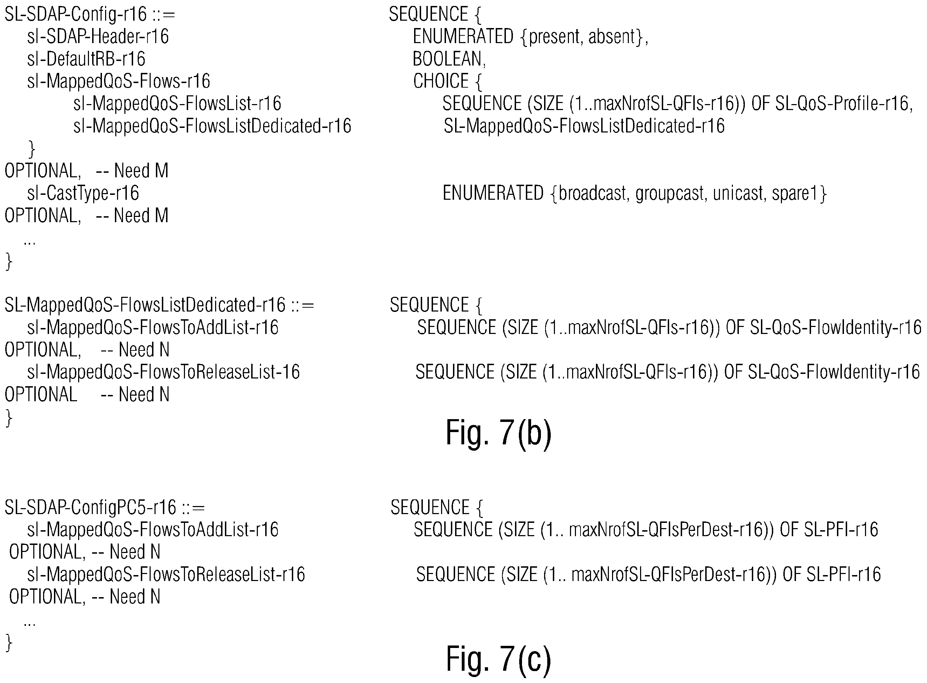

The SDAP layer illustrated in Fig. 6 above was introduced in 3GPP NR Rel-15 to deal with the mapping or re-mapping of the QoS flows into respective radio bearers, like data radio bearers, DRBs, for carrying the user data or payload data, and signaling radio bearers, SRBs, for carrying control data or control signaling. The SDAP layer may be configured, for example at the UE, using RRC information elements, IEs, illustrated in Fig. 7. Fig. 7(a) illustrates the IEs for configuring the SDAP layer for the Uu interface, while Fig. 7(b) and Fig. 7(c) illustrate the IEs for configuring or setting up the SDAP layer for the sidelink interface, the PC5. The UE may be configured with the SDAP layer for the Uu link and/or the PC5 link using respective RRC messages, for example the RRC messages illustrated in the following table.

| RRC messages for Uu Communication | | RRC messages for Sidelink (PC5) Communication | | |
|---|---|---|---|---|
| *• RRCReconfiguration* (SDAP-Config) | | *• RRCReconfigurationSidelink* (SL-SDAP-ConfigPC5-r16) | | |
| | ∘ SRB1 or SRB3 | | ∘ SL-SRB3 | |
| | ∘ RLC-SAP: AM | | ∘ RLC-SAP: AM | |
| | ∘ Logical Channel: DCCH | | ∘ Logical Channel: SCCH | |
| | ∘ Direction: Network to UE | | ∘ Direction: UE to UE | |
| *• RRCReconfiguration* (SL-ConfigDedicatedNR) | | • SL-SDAP-Config-r16 | | |
| | | | ∘ *NR-Sidelink-Preconf* | |
| | ∘ SRB1 or SRB3 | | ∘ *System InformationSIB12 IE* | |
| | ∘ RLC-SAP: AM | | | ▪ Signalling radio bearer: N/A |
| | ∘ Logical Channel: DCCH | | | ▪ RLC-SAP: TM |
| | ∘ Direction: Network to UE | | | ▪ Logical channels: BCCH |
| | | | | ▪ Direction: Network to UE |
| | | | ∘ *SL-ConfigDedicatedNR IE* | |

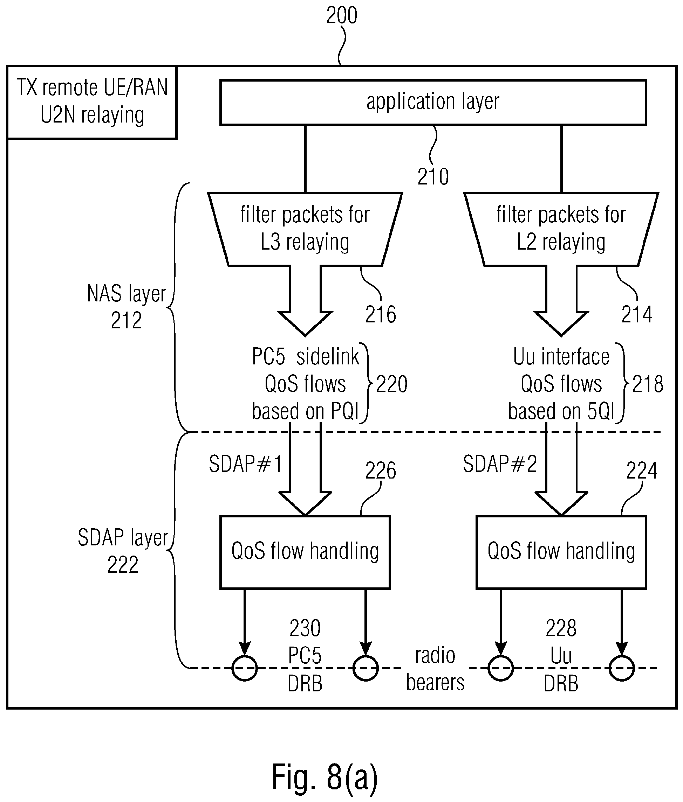

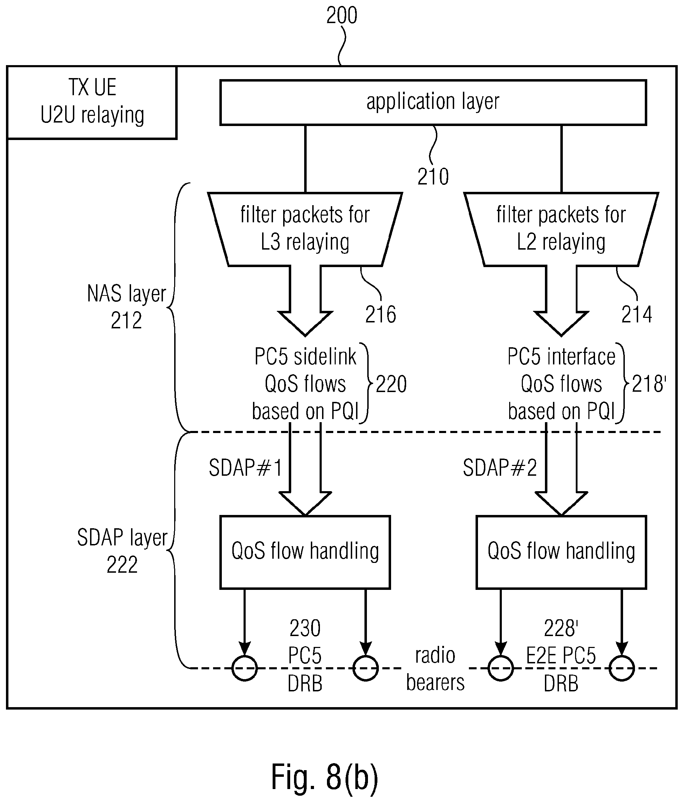

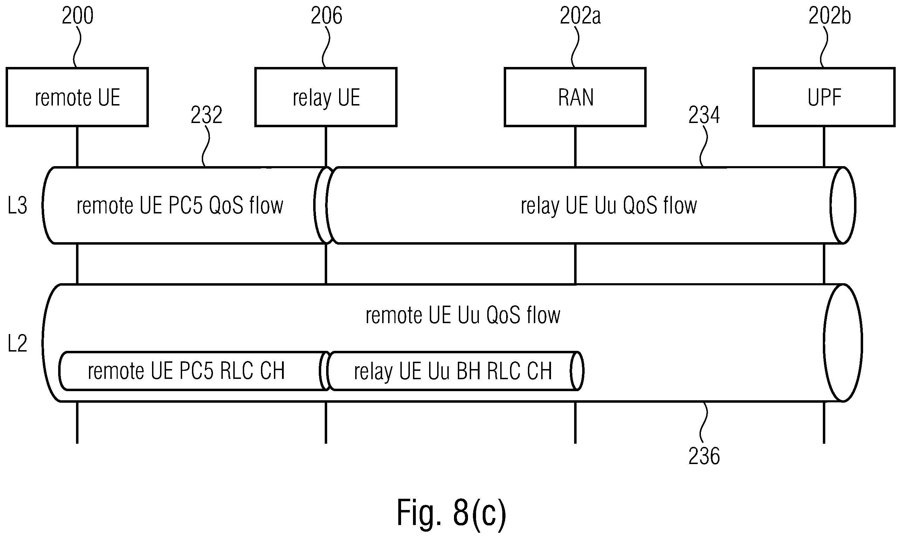

As mentioned above, in a wireless communication system, a remote UE may connect to a certain destination via a relay device, and the destination may be a RAN/CN entity or another UE. In the former case, the communication is also referred to as a UE-to-network, U2N, relaying, while in the latter case, it is referred to as UE-to-UE, U2U, relaying. Both, for U2N relaying and U2U relaying, the above-mentioned layer 2, L2, relaying scheme and the layer 3, L3, relaying scheme may be employed. In other words, entities involved in relaying packets between a target device, like a remote UE, and a destination need to implement the respective logical entities for handling L2 relaying and L3 relaying. Fig. 8 illustrates a conventional approach for SDAP layer mapping of a QoS flow to the respective PC5 or Uu radio bearers, like SRB or DRB, for a relaying application. Fig. 8(a) illustrates the conventional SDAP mapping for U2N relaying, and Fig. 8(b) illustrates it for U2U relaying. In Fig. 8, schematically, a remote UE 200 is illustrated, however, it is noted that the illustrated protocol stack is also found in the relay device and in the RAN entity. As is illustrated in Fig. 8(a), an application layer 210 provides packets or data packets, like packets including payload data/user data or control data, to the NAS layer 212. The NAS layer 212 filters packets received from the application layer 210 so as to determine whether the packet is to be relayed in accordance with the L2 relaying scheme as is illustrated at 214, or whether the packet is to be relayed in accordance with the L3 relaying scheme, as is illustrated at 216. Based on the 5G QoS identifier, 5QI, a data packet is mapped to a certain QoS flow for a communication over the Uu interface, as is illustrated at 218, while a packet to be relayed in accordance with the L3 relaying scheme is mapped on the basis of the PC5 5G QoS identifier, PQI, to a certain QoS flow for a communication of the PC sidelink, as illustrated at 220. In the SDAP layer 222, the respective QoS flows are mapped by respective QoS flow handling entities 224 and 226 to the respective radio bearers for the Uu interface, as is illustrated at 228 or the radio bearers for the PC5 interface, as is illustrated at 230.

Fig. 8(b) illustrates the mapping for U2U relaying. Fig. 8(b) corresponds to Fig. 8(a), except that the NAS layer 212, at 218', maps a packet to a QoS flow for the PC5 interface based on the PQI, and except for the QoS flow handling entity 224' in the SDAP layer 222 mapping the QoS to the radio bearer for the E2E connection to the target UE, as is illustrated at 228'.

Thus, as is illustrated in Fig. 8, the SDAP layer maps the PC5/Uu QoS flow to the corresponding PC5/Uu radio bearers based on the QoS flows which may be setup by the core network. In other words the SDAP layer is configured by the network for handling the mapping of the one or more QoS flows to the corresponding radio bearers which may include the signaling radio bearer, SRB, and the data radio bearer, DRB. The SDAP layer is configured with specific QoS flow handling entities for a communication over the PC5, like QoS flow handling entity 226, and QoS flow handling entities for a communication to the destination, like entities 224 and 224'. These entities are capable to perform the mapping only to the corresponding radio bearer, namely the PC5 radio bearers 230 in case of mapping a PC5 QoS flow or to the radio bearers associated with the direct connection to the destination, like the Uu radio bearers 228 or the E2E PC5 radio bearers 228'. Thus, for handling a transmission/reception of data packets that may be relayed in accordance with the L2 relaying scheme or in accordance with the L3 relaying scheme, the SDAP layer needs to include at least two independent SDAP entities to handle the different schemes. The independent SDAP entities are needed because L3 relaying, in accordance with which a connection or link terminates on a hop-by-hop basis, needs the application layer packet to be filtered into a remote UE PC5 QoS flow for the transmission over the first hop, for example over the sidelink from the remote UE to the relay device, while, at the relay device, the application layer packet is filtered into a relay UE Uu QoS flow for a communication over the second hop from the relay device to the RAN. On the other hand, in case of applying the L2 relaying scheme, the remote UE may negotiate an end-to-end, E2E, QoS flow to the destination because the higher layers of the remote UE terminate at the RAN. In case the destination is the RAN/CN, the remote UE employs a SDAP entity for filtering the application layer packet into a remote UE Uu QoS flow to the network. In case the destination is another UE, the application layer packet may be filtered into a remote UE E2E PC5 QoS flow to the further UE.

Fig. 8(c) illustrates the just-mentioned QoS flow configuration over the relay path for L2 and L3 relaying. As is illustrated, for the L3 relaying scheme, the remote UE 200 filters a packet into the remote UE PC5 QoS flow 232 from the remote UE 200 to the relay UE 206 which, in turn, filters the received packets into the relay UE Uu QoS flow 234 over the second hop. For the L2 relaying scheme, the remote UE 200 establishes an end-to-end QoS flow, like the remote UE Uu QoS flow 236 from the remote UE 220 to the network 202. For example, in L2 relays, the forwarding of the remote UE data is done over the RLC layer (a so-called adaptation layer) where a notion of QoS flow does not exist. Therefore, at the remote UE, data is mapped to a PC5 RLC channel. Subsequently, at the L2 relay UE, after passing through the adaptation layer, the remote UE data is mapped uniquely to a Uu RLC channel so that the remote UE data can be identified at the RAN. In the case of L3, the forwarding of the remote UE data is done over the whole L2 layer (i.e., at L3) where the notion of a QoS flow exists. As a result in L3 relays, the remote UE data is mapped to QoS flows directly and the visibility at the RLC level is not required.

As has been illustrated above, implementing in the respective entities involved in the relaying of data packets between a source device and a destination device both the L2 relaying scheme and the L3 relaying scheme requires the handling of diverse traffic requirements, for example at the NAS layer 212, and exacerbates the complexity at the respective entities, like the remote UE, the relay UE and the RAN entity due to the need to setup a large number of SDAP entities and corresponding QoS flows.

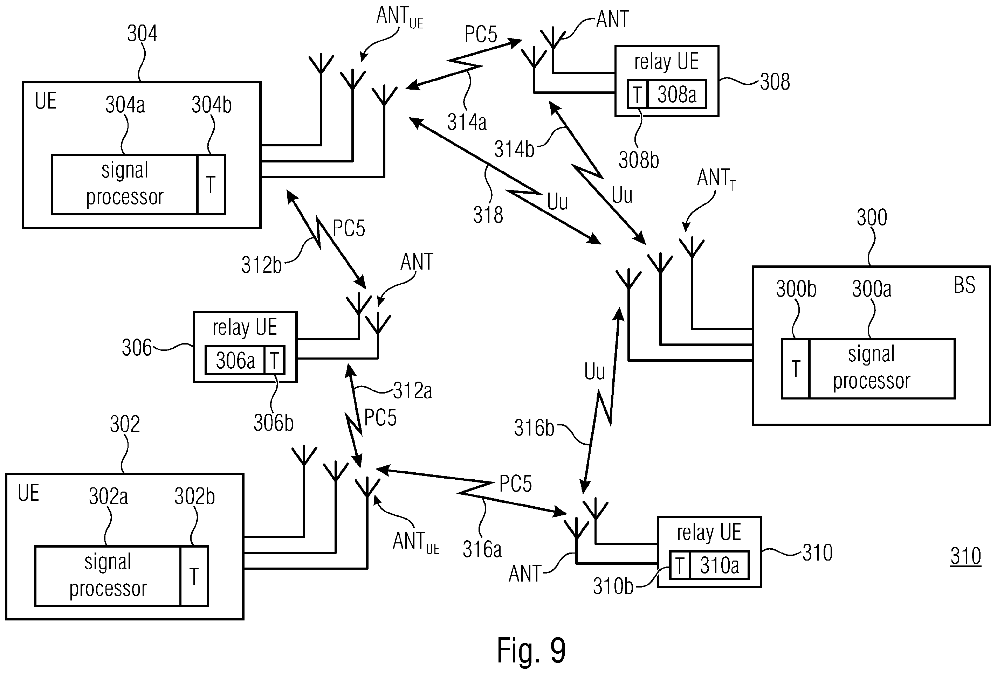

The present invention addresses the above issues, and embodiments implement a so-called hybrid QoS flow which minimizes the complexity at the respective entities involved in the relaying process, like the remote UE, the relay UE and the RAN entity. The hybrid QoS flow is associated with parameters and characteristics capable of handling QoS requirements both for the sidelink, like the PC5, and the link to the destination, like the Uu interface. In accordance with the inventive approach, the traffic requirements of the different relaying schemes are mapped into the same QoS flow, the hybrid QoS flow, without the need to setup separate flows. In other words, the hybrid QoS flow enables a QoS flow to be transparent to the type of relaying scheme used in the system. Further, using a single flow, like the inventive hybrid QoS flow, allows mapping the QoS flow to a single SDAP entity that is capable of mapping the QoS flow both to the sidelink or PC5 protocol stack and to the Uu protocol stack. Thus, rather than using a plurality of separated QoS handling entities in the SDAP layer, as described above with regard to conventional approaches, in accordance with embodiments of the present invention, a common or single SDAP entity may be provided for handling both the mapping to the PC5/Uu protocol stacks. Embodiments of the present invention may be implemented in a wireless communication system as depicted in Fig. 1 including base stations and users, like mobile terminals or loT devices. Fig. 9 is a schematic representation of a wireless communication system including a transmitter 300, like a base station or gNB, one or more user devices, UEs, 302, 304 and one or more relaying entities or relay nodes 306, 308 and 310, like relay UEs, for implementing embodiments of the present invention. The transmitter 300 and the receivers 302, 304 may communicate via the respective relaying entities 306, 308, 310 using respective wireless communication links or channels 312a, 312b, 314a, 314b and 316a, 3146, like respective radio links. The transmitter 300 may include one or more antennas ANT_{T} or an antenna array having a plurality of antenna elements, a signal processor 300a and a transceiver 300b, coupled with each other. The receivers 302, 304 include one or more antennas ANT_{UE} or an antenna array having a plurality of antennas, a signal processor 302a, 304a, and a transceiver 302b, 304b coupled with each other. Each of the relaying entities 306, 308, 310 includes one or more antennas ANT or an antenna array having a plurality of antennas, a signal processor 306a, 308a, 310a, and a transceiver T 306b, 308b, 310b coupled with each other. The base station 300 and the UE 302 may communicate via the relaying entity 310 using the wireless communication link 316b, like a radio link using the Uu interface or another 3GPP or non-3GPP interface, between the base station 300 and the relaying entity 310, and using the wireless communication link 316a, like a radio link using the PC5/sidelink, SL, interface, between the UE 302 and the relaying entity 310. Likewise, the base station 300 and the UE 304 may communicate via the relaying entity 308 using the wireless communication link 314b, like a radio link using the Uu interface, between the base station 300 and the relaying entity 308, and using the wireless communication link 314a, like a radio link using the SL interface, between the UE 304 and the relaying entity 308. The UEs 302, 304 may communicate with each other via the relaying entity 306 using the wireless communication link 312a, like a radio link using the SL interface, between the UE 302 and the relaying entity 306, and using the wireless communication link 312b, like a radio link using the SL interface, between the UE 304 and the relaying entity 310. In accordance with embodiments, a UE, like UE 304, may communicate, in addition to the path via the relay UE 308, directly with the base station 304 using Uu link 316. Any one of the system or network, the one or more UEs 302, 304, the one or more relaying entities 306-310 and/or the base station 300, as illustrated in Fig. 9, may operate in accordance with the inventive teachings described herein. In the following description, the relaying entity is referred to as relay UE.

### Apparatus (remote UE/gNB) transmitting via relay device and using hybrid QoS flow

The present invention provides an apparatus for a wireless communication network,
wherein the apparatus is to transmit a data packet to a destination in the wireless communication network via one or more relay devices using a first relaying scheme, like layer 2, L2, relaying, or using a second relaying scheme, like layer 3, L3, relaying, and
wherein the apparatus is to map the data packet to a hybrid Quality of Service, QoS, flow between the apparatus and the destination, the hybrid QoS flow including QoS parameters for the first relaying scheme and for the second relaying scheme.

In accordance with embodiments, the first relaying scheme is to establish a first QoS flow between the apparatus and the destination, and the second relaying scheme is to establish a second QoS flow between the apparatus and the relay device.

In accordance with embodiments, dependent on whether the data packet is to be relayed to the destination using the first relaying scheme or using the second relaying scheme, the apparatus is to map the hybrid QoS flow to a first radio bearer for a link to the destination or to a second radio bearer for a link to the relay device.

In accordance with embodiments, the apparatus is configured with a common QoS flow handling entity, like a Service Data Adaptation Protocol, SDAP, entity, for mapping the hybrid QoS flow to the first radio bearer or to the second radio bearer for a link to the relay device.

In accordance with embodiments, the hybrid QoS flow includes QoS parameters associated with a QoS flow for a Uu communication and QoS parameters associated with a QoS flow of a sidelink communication.

In accordance with embodiments,
the QoS parameters for the Uu communication comprises one or more of the following:
   - a 5G QoS Identifier, 5QI, identifying one or more QoS characteristics
   - an Allocation and Retention Priority, ARP
   - a Reflective QoS Attribute, RQA,
the QoS parameters for the sidelink communication comprises one or more of the following:
   - a PC5 5G QoS Identifier, PC5 5QI, identifying one or more QoS characteristics,
   - one or more PC5 Flow Bit Rates,
   - one or more PC5 Link Aggregated Bit Rates,
   - a range, like a required communication range,
   - an aggregated delay,
   - an aggregated jitter, and
the one or more QoS characteristics comprises one or more of the following:
   - a resource type,
   - a priority level,
   - a packet delay budget,
   - a packet error rate,
   - a default maximum data burst volume,
   - a default averaging window.

In accordance with embodiments, the apparatus is a user device, UE, and wherein the UE is configured with the hybrid QoS flow by one or more of the following:
- a broadcast signaling, e.g., during a connection setup,
- a groupcast signaling, e.g., by a relay or a group-lead UE,
- a unicast signaling, e.g., by a relay UE,
- the network via apparatus-specific signaling, e.g., via a Non Access Stratum, NAS, signaling from a core network, CN, entity of the wireless communication network, like the Access and Mobility Management Function, AMF, of the CN.

In accordance with embodiments, within the hybrid QoS flow, the data packet is explicitly identified as a data packet is to be relayed to the destination using the first relaying scheme or using the second relaying scheme, using one or more of the QoS parameters, like the Allocation and Retention Priority, ARP.

In accordance with embodiments,
one or more first values of the QoS parameter indicate the data packet to be relayed to the destination using the first relaying scheme, and one or more second values of the QoS parameter indicate the data packet to be relayed to the destination using the second relaying scheme, or
among values the QoS parameters may take, a specific set of values indicates the data packet to be relayed to the destination using the first relaying scheme, and the remaining values indicate the data packet to be relayed to the destination using the second relaying scheme, or
values the QoS parameters may take are divided into a first set of values, e.g., lower values, and into a second set of values, e.g., higher values, for indicating that the data packet is to be relayed to the destination using the first relaying scheme and the second relaying scheme, respectively, or
among values the QoS parameters may take, a specific set of values indicates the data packet to be relayed to the destination using the first relaying scheme and the second relaying scheme, and the remaining values indicate the data packet to be relayed to the destination using either the first relaying scheme or the second relaying scheme, or
values the QoS parameters may take are divided into a first set of values, e.g., lower values, and into a second set of values, e.g., higher values, the first set of values indicating that the data packet is to be relayed to the destination using the first relaying scheme and the second relaying scheme, and the second set of values indication that the data packet is to be relayed to the destination using either the first relaying scheme or the second relaying scheme.

In accordance with embodiments, the apparatus is a user device, UE, and wherein the UE is to receive respective values of the QoS parameter from a core network, CN, of the wireless communication network via a Non Access Stratum, NAS, signaling.

In accordance with embodiments,
the apparatus is configured or preconfigured with first Logical Channel ID, LCID, for the first relaying scheme, and with a second LCID for the second relaying scheme, and
the apparatus is to identify a logical channel for the first relaying scheme carried in a Medium Access Control, MAC, header by the first LCID, a logical channel for the second relaying scheme carried in the MAC header by the second LCID.

In accordance with embodiments, the apparatus is to perform a handover from a current relay device to a new relay device supporting the current relaying scheme or a hybrid QoS flow responsive to a certain event, e.g., a radio link failure, RLF, on the link between the apparatus and the relay device, or in case the current relay device does not support a current relaying scheme by which the data packet is to be relayed.

In accordance with embodiments, the apparatus is to connect at the same time to a first relay device operating in accordance with the first relaying scheme and to a second relay device operating in accordance with the second relaying scheme.

In accordance with embodiments, the apparatus is a user device, UE, and wherein the UE is connected via the first relay device to a first destination UE supporting the first relaying scheme, and to via the second relay device to a second destination UE supporting the second relaying scheme.

In accordance with embodiments, the apparatus is a user device, UE, and wherein the UE is connected via the first and second relay devices to a destination Radio Access Network, RAN, entity, like a base station, supporting a hybrid QoS, wherein the RAN entity may be connected to an application server.

In accordance with embodiments, the apparatus is a user device, UE, and wherein the UE is connected via the first relay device to a first destination Radio Access Network, RAN, entity, like a base station UE supporting the first relaying scheme or a hybrid QoS flow, and via the first relay device to a second destination RAN entity for a data packet transmission according to a second relay device supporting the second relaying scheme or a hybrid QoS flow, wherein the first and second RAN entities communicate over a backhaul, e.g., for exchanging a QoS flow ID.

In accordance with embodiments, the apparatus is to connect at the same time to the destination directly and via the relay device.

In accordance with embodiments, in case of a link failure, RLF, on the direct link or on the relay link, the apparatus, e.g., in case of a temporary connection loss, the apparatus is to resume the hybrid QoS flow over the link not affected by the RLF.

### Apparatus (remote UE/gNB) receiving via relay device and using hybrid QoS flow

The present invention provides an apparatus for a wireless communication network,
wherein the apparatus is to receive a data packet from a destination in the wireless communication network via one or more relay devices using a first relaying scheme, like layer 2, L2, relaying, or using a second relaying scheme, like layer 3, L3, relaying, and
wherein the apparatus is to map the received data packet to a hybrid Quality of Service, QoS, flow between the apparatus and the destination, the hybrid QoS flow including QoS parameters for the first relaying scheme and for the second relaying scheme, the first relaying scheme establishing a first QoS flow between the apparatus and the destination, and the second relaying scheme establishing a second QoS flow between the apparatus and the relay device.

In accordance with embodiments,
the apparatus is a user device, UE, and is to connect to the relay device over the sidelink, and the destination comprises a further UE or an entity of the core network or the radio access network, RAN, of the wireless communication network, or
the apparatus is a RAN entity and is to connect to the relay device over the Uu link, and the destination comprises a user device UE.

In accordance with embodiments, the user device comprises one or more of the following: a mobile terminal, or a stationary terminal, or a cellular loT-UE, or a vehicular UE, or a leader, GL, UE, or an loT or narrowband loT, NB-loT, device, or wearable device, like a smartwatch, or a fitness tracker, or smart glasses, or a ground based vehicle, or an aerial vehicle, or a drone, or a moving base station, or road side unit, RSU, or a building, or any other item or device provided with network connectivity enabling the item/device to communicate using the wireless communication network, e.g., a sensor or actuator, or any other item or device provided with network connectivity enabling the item/device to communicate using a sidelink the wireless communication network, e.g., a sensor or actuator, or any sidelink capable network entity.

In accordance with embodiments, the entity of the core network or the radio access network comprises one or more of the following: a macro cell base station, or a small cell base station, or a central unit of a base station, or a distributed unit of a base station, or a road side unit, RSU, or an AMF, or an MME, or an SMF, or a core network entity, or mobile edge computing, MEC entity, or a network slice as in the NR or 5G core context, or any transmission/reception point, TRP, enabling an item or a device to communicate using the wireless communication network, the item or device being provided with network connectivity to communicate using the wireless communication network.

### Relay apparatus connected to remote UE/RAN entity using hybrid QoS

The present invention provides an apparatus for a wireless communication network,
wherein the apparatus is to act as a relaying entity so as to provide functionality to support connectivity between one or more sources and a destination of the wireless communication network, wherein a connection between the source and the destination comprises one or more sidelinks, and
wherein the source and/or the destination comprises an apparatus in accordance with embodiments of the present invention.

In accordance with embodiments, the apparatus is to connect via a sidelink to one or more of the following:
- the source, like one or more remote UEs,
- the destination,
- one or more further relay devices.

### Relay apparatus using hybrid QoS

The present invention provides an apparatus for a wireless communication network,
wherein the apparatus is to act as a relaying entity so as to provide functionality to support connectivity between one or more sources and a destination of the wireless communication network, wherein a connection between the source and the destination comprises one or more sidelinks,
wherein the apparatus is to connect via a sidelink to one or more of the following:
   - the source, like one or more of the remote UEs,
   - the destination,
   - one or more further relay devices, and
wherein the apparatus is to map a data packet to be relayed to a hybrid Quality of Service, QoS, flow between the source and the destination, the hybrid QoS flow including QoS parameters for the first relaying scheme and for the second relaying scheme, the first relaying scheme establishing a first QoS flow between the apparatus and the destination, and the second relaying scheme establishing a second QoS flow between the apparatus and the relay device.

In accordance with embodiments, the apparatus is connected to a plurality of sources and is to bundle QoS flows between the sources and the apparatus into one or more bundled QoS flows between the apparatus and the destination.

### Relay apparatus bundling QoS flows

The present invention provides an apparatus for a wireless communication network,
wherein the apparatus is to act as a relaying entity so as to provide functionality to support connectivity between one or more sources and a destination of the wireless communication network, wherein a connection between the source and the destination comprises one or more sidelinks,
wherein the apparatus is to connect via a sidelink to one or more of the following:
   - the source, like one or more of the remote UEs,
   - the destination,
   - one or more further relay devices, and
wherein the apparatus is connected to a plurality of sources and is to bundle QoS flows between the sources and the apparatus into one or more bundled QoS flows between the apparatus and the destination.

In accordance with embodiments, the apparatus is to bundle
first QoS flows between the sources and the apparatus into a first common QoS flow between the apparatus and the destination, the first QoS flows being associated with a certain QoS parameter, e.g., a first priority or a priority at or exceeding a priority threshold, and
second QoS flows between the sources and the apparatus into a second common QoS flow between the apparatus and the destination, the second QoS flows being associated with the certain QoS parameter, e.g., a second priority or a priority below the priority threshold.

### Network

The present invention provides a wireless communication network, comprising
one or more first devices according to embodiments of the present invention,
one or more second devices according to embodiments of the present invention, and
wherein the first and second devices are connected via one or more relay devices according to embodiments of the present invention for providing functionality to support connectivity between the first and second devices.

In accordance with embodiments, at least one or more of the first or second devices indicate their support of any of the inventive features, e.g., responsive to a query received from another entity support of the hybrid QoS flow is indicated.

In accordance with embodiments, support of the hybrid QoS flow is indicated by a signaling, the signaling comprising one or more of the following:
- a PC5-RRC - signaling,
- an RRC - signaling,
- a MAC signaling,
- a broadcast via System Information,
- a signaling during an initial access, e.g., in any one of Msg. 1 to Msg. 4 during a 4-step RACH process or in Msg. A and/or Msg. B during a 2-step RACH process.

In accordance with embodiments,
the first device comprises a user device, UE, and the second device comprises a RAN entity, like a base station,
responsive to the relay device performing a handover, HO, from a current RAN entity connected to a first core network entity to a new RAN entity connected to a second core network entity, the wireless communication network is to the transfer a UE context containing characteristics of the hybrid QoS flow from the first core network entity to the second core network entity and to the second RAN entity, or
responsive to the relay device performing a handover, HO, from a current RAN entity connected to a first core network entity to a new RAN entity also connected to the first core network entity, the wireless communication network is to the transfer a UE context containing characteristics of the hybrid QoS flow from the current RAN entity to the new RAN entity, e.g., using a backhaul interface, like the Xn interface.

In accordance with embodiments, responsive to
- a change of one or more properties on a first link between the first device and the relay and/or on a second link between the relay device and the second device, like changes in channel quality, relay or network load, or
- a handover, or
- a change of the relay device,
the wireless communication network is to redistribute one or more of the QoS parameters of the hybrid QoS flow between the first and second links.

In accordance with embodiments, the wireless communication network comprises
- one or more single-hop connections between the first device, like a remote UE, and the second device, like the destination, and/or
- one or more multi-hop connections between the first device, like a remote UE, and the second device, like the destination.

### Method for operating an apparatus (remote UE/gNB) transmitting via a relay device and using hybrid QoS flow

The present invention provides a method for operating an apparatus of a wireless communication network, the method comprising:
transmitting a data packet to a destination in the wireless communication network via one or more relay devices using a first relaying scheme, like layer 2, L2, relaying, or using a second relaying scheme, like layer 3, L3, relaying, and
mapping the data packet to a hybrid Quality of Service, QoS, flow between the apparatus and the destination, the hybrid QoS flow including QoS parameters for the first relaying scheme and for the second relaying scheme.

### Method for operating an apparatus (remote UE/gNB) receiving via a relay device and using hybrid QoS flow

The present invention provides a method for operating an apparatus of a wireless communication network, the method comprising:
receiving a data packet from a destination in the wireless communication network via one or more relay devices using a first relaying scheme, like layer 2, L2, relaying, or using a second relaying scheme, like layer 3, L3, relaying, and
mapping the received data packet to a hybrid Quality of Service, QoS, flow between the apparatus and the destination, the hybrid QoS flow including QoS parameters for the first relaying scheme and for the second relaying scheme, the first relaying scheme establishing a first QoS flow between the apparatus and the destination, and the second relaying scheme establishing a second QoS flow between the apparatus and the relay device.

### Method for operating an relay apparatus using hybrid QoS

The present invention provides a method for operating an apparatus of a wireless communication network, wherein the apparatus is to act as a relaying entity so as to provide functionality to support connectivity between one or more sources and a destination of the wireless communication network, wherein a connection between the source and the destination comprises one or more sidelinks, the method comprising:
connecting via a sidelink to one or more of the following:
   - the source, like one or more of the remote UEs,
   - the destination,
   - one or more further relay devices, and
mapping a data packet to be relayed to a hybrid Quality of Service, QoS, flow between the source and the destination, the hybrid QoS flow including QoS parameters for the first relaying scheme and for the second relaying scheme, the first relaying scheme establishing a first QoS flow between the apparatus and the destination, and the second relaying scheme establishing a second QoS flow between the apparatus and the relay device.

### Method for operating an relay apparatus bundling QoS flows

The present invention provides a method for operating an apparatus of a wireless communication network, wherein the apparatus is to act as a relaying entity so as to provide functionality to support connectivity between one or more sources and a destination of the wireless communication network, wherein a connection between the source and the destination comprises one or more sidelinks, the method comprising:
connecting via a sidelink to one or more of the following:
- the source, like one or more of the remote UEs,
- the destination,
- one or more further relay devices, and
connecting to a plurality of sources and bundling QoS flows between the sources and the apparatus into one or more bundled QoS flows between the apparatus and the destination.

### Computer Program Product

Embodiments of the first aspect of the present invention provide a computer program product comprising instructions which, when the program is executed by a computer, causes the computer to carry out one or more methods in accordance with the present invention.

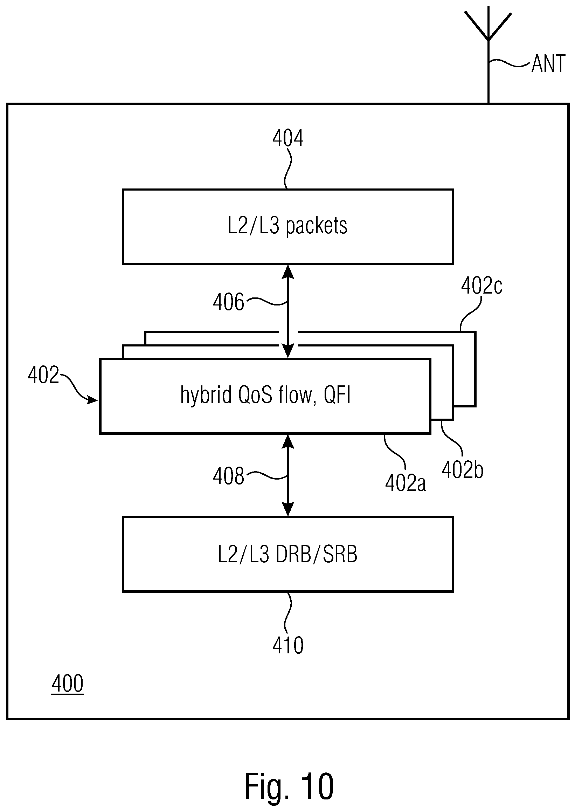

Embodiments of the present invention provide an apparatus for a wireless communication system reducing or minimizing a complexity associated with the transmission/reception of data packets in accordance with different relaying schemes, like L2 relaying or L3 relaying. Fig. 10 illustrates an embodiment of an apparatus in accordance with the teaching of the present invention. The apparatus 400 may be a remote UE or a relay UE or a RAN entity, like a base station. For reducing/minimizing the above-mentioned complexity for handling the relaying of data packets in accordance with, e.g., the L2 and L3 traffic requirements, the present invention provides a hybrid QoS flow, as is indicated at 402 in Fig. 10. In the apparatus 400, data packets 404 to be relayed in accordance with the L2 relaying scheme or in accordance with the L3 relaying scheme are mapped 406 to the hybrid QoS flow 402, for example, on the basis of a hybrid QFI which is characterized by latency and reliability requirements. In other words, the hybrid QFI is just an indicator or an ID associated with the QoS Flow. It is further characterized by parameters relating, e.g., to latency and reliability. In accordance with embodiments the apparatus 400 may be configured with one or more hybrid QoS flows 402a, 402b, 402c, each hybrid QoS flow including parameters/characteristics having values set in accordance with specific traffic requirements when relaying a L2 or L3 packet. A packet may be mapped to the required hybrid QoS flow using the QFI of the hybrid QoS flow that is associated with the packet. Stated differently, the apparatus may be configured with n hybrid QoS flows, with n≥1.

In accordance with embodiments, the hybrid QoS flow 402 is mapped 408 to the appropriate radio bearer 410. In other words, dependent on whether a data packet is to be relayed to the destination using the first relaying scheme, like the L2 relaying scheme, or using the second relaying scheme, like the L3 relaying scheme, the apparatus 400 maps the hybrid QoS flow 402 associated with the packet to a first radio bearer for a link to the destination or to a second radio bearer for a link to the relay device.

As mentioned above, the apparatus 400 may be implemented at one or more of the remote UE, the relay UE and the RAN entity, and when transmitting data packets, it may operate in a way as described above. When receiving data packets that are relayed in accordance with the L2 relaying scheme or the L3 relaying scheme, the apparatus 400 maps the QoS flow to the respective packets.

In accordance with embodiments, the hybrid QoS flow 402 may include a combination of the QoS parameters and characteristics associated with a Uu communication and a PC5 communication, respectively, so as to allow different kinds of traffic with varying requirements, for example with regard to latency and reliability, to be filtered into the hybrid QoS flow. The following table illustrates the hybrid QoS flow 402 in accordance with an embodiment including a combination of the Uu and PC5 QoS parameters and characteristics.

| QoS Flow of Uu Communication | | QoS Flow of Sidelink (PC5) Communication | | Hybrid QoS Flow (Combination of Uu and PC5 ) | |
|---|---|---|---|---|---|
| QFI is associated with the following: | | QFI is associated with the following: | | Hybrid QFI associated with the following: | |
| ➢ 5G QoS Parameters | | ➢ PC5 QoS Parameters: | | ➢ 5G + PC5 QoS Parameters | |
| | | | ∘ PQI: special 5QI | | ∘ 5QI + PQI |
| | ∘ 5QI: 5G QoS characteristics | | ∘ PC5 Flow Bit Rates | | |
| | | | ∘ PC5 Link aggregated bit | | ∘ ARP, RQA |
| | ∘ ARP: Allocation and retention priority | | rates | | ∘ Flow Bit rates |
| | | | ∘ Range | | |
| | | | | | ∘ Aggregated bit rates |
| | ∘ RQA: Reflective QoS Attribute | | | | ∘ Range, like required communication range) |
| | | | | | ∘ Aggregated delay or jitter |
| ➢ | 5QI QoS characteristics | ➢ PQI QoS characteristics | | ➢ Same QoS Characteristics | |
| | | | ∘ Resource type | | |
| | ∘ Resource type | | ∘ Priority level | | |
| | ∘ Priority level | | ∘ Packet delay budget | *The above combination is illustrated as an example. Any combination of the Uu and PC5 QoS flow parameters and characteristics may be used* | |
| | ∘ Packet delay budget | | ∘ Packet error rate | | |
| | | | ∘ Default maximum data burst volume | | |
| | ∘ Packet error rate | | | | |
| | | | ∘ Default averaging window | | |
| | ∘ Default maximum data burst volume | | | | |
| | ∘ Default averaging window | | | | |

It is noted that the above table illustrates an embodiment for the hybrid QoS flow, however, the present invention is not limited to such an embodiment, rather, any combination of the Uu and PC5 QoS flow parameters and characteristics may be implemented in a hybrid QoS flow.

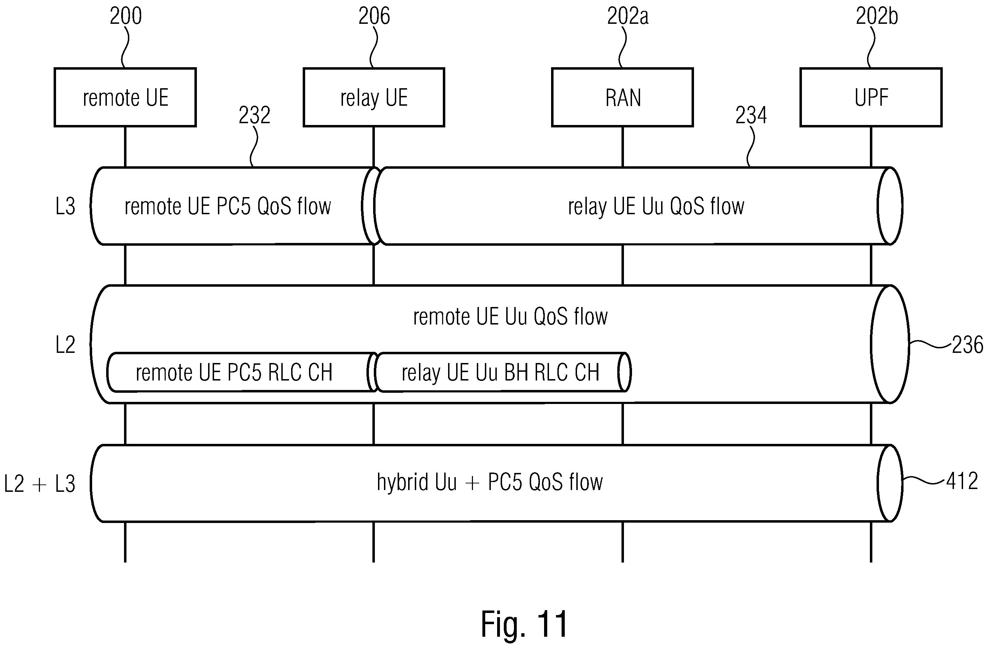

In accordance with embodiments, using the hybrid QoS flow allows establishing a QoS flow incorporating both the QoS flows associated with a PC5 link and an E2E link, for example a hybrid Uu + PC5 QoS flow. Fig. 11 illustrates an embodiment of the present invention implementing a QoS flow over a relay path including the inventive hybrid QoS flow over a single hop. Fig. 11 illustrates, similar as Fig. 8(c), the remote UE 200, the relay 206, the RAN 202a and the UPF 202b. In addition to the QoS flow configurations over the relay path for L2 and L3 relaying, as illustrated in Fig. 8(c), Fig. 11 illustrates an embodiment of the inventive QoS flow configuration over the relay path including the hybrid QoS flow. As is illustrated at L2 + L3, the remote UE, by employing the hybrid QoS flow and mapping packets according to the L2/L3 relaying scheme, allows implementing the hybrid Uu + PC5 QoS flow 412 from the remote UE to the core network. In case the destination is not at the core network but at another UE, the QoS flow configuration, in accordance with embodiments of the present invention, allows establishing a hybrid E2E PC5 + PC5 QoS flow from the remote UE to the destination UE. Thus, in case of L3 relaying, the remote UE only has the PC5 QoS flow to the relay, and the relay UE, in turn, has the Uu QoS flow to the RAN. On the other hand, in case of L2 relaying, the remote UE may use the link to have an E2E Uu QoS flow to the RAN or another UE. Over the one or more hops, the information regarding the QoS flow is forwarded using the radio link channel, RLC. The hybrid QoS flow in accordance with embodiments of the present invention enables the QoS flow to be transparent to the type of relaying being used in the system which simplifies the protocol stack at the respective entities by enabling a common data processing pipeline to be setup at the entities, like the remote UE, the relay UE and the destination. Fig. 11 illustrates a single hop scenario, i.e., only a single relay UE is illustrated. However, the hybrid QoS flow is also applicable for a multi-hop scenario including two or more relay UEs. The principles described above with reference to Fig. 11 also apply for the multi -hop case. In such a scenario one or more additional relay UEs are provided between the relay UE 206 in Fig. 11 and the destination.

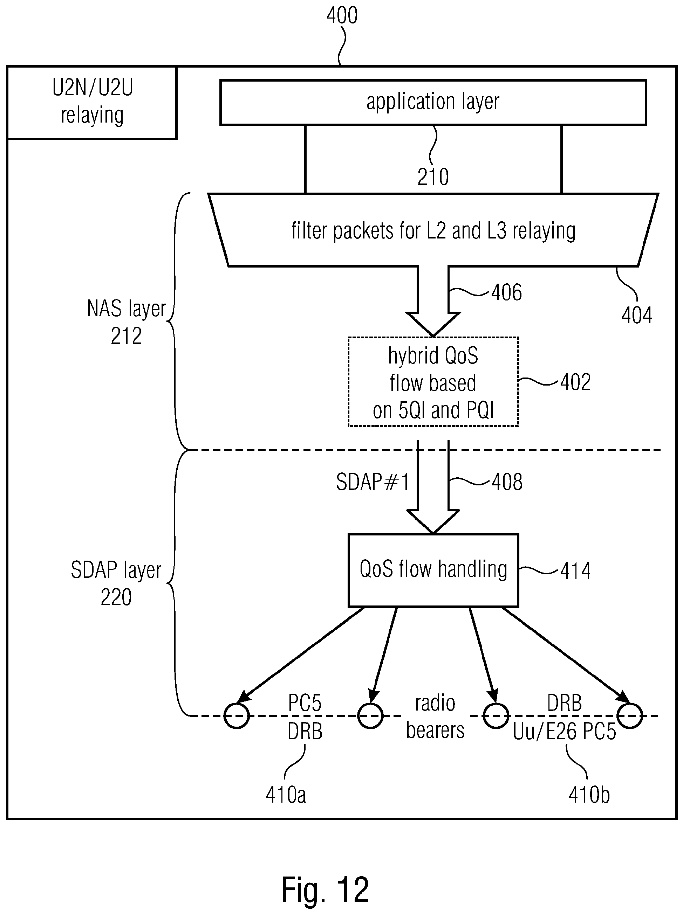

As mentioned above, in accordance with the inventive approach, the complexity for implementing both L2 relaying and L3 relaying may be reduced by implementing the hybrid QoS flow. Fig. 12 illustrates an embodiment for mapping the hybrid QoS flow to the respective radio bearers. Fig. 12 is similar to Fig. 8 and illustrates the NAS layer 212 and the SDAP layer 222. The application layer 210 provides the data packets to be relayed using either L2 relaying or L3 relaying. The NAS layer 212, as is illustrated at 404, filters the packets for L2 and L3 relaying and maps 406 the packet to the suitable hybrid QoS flow 402, e.g., based on the 5QI in case of L2 relaying or based on the PQI in case of L3 relaying.

In accordance with other embodiments, also a hybrid QFI may be employed. The hybrid QoS flow associated with a packet is mapped 408 to the SDAP entity 414 which is a common QoS flow handling entity for handling packets or traffic to be relayed in accordance with the L2 relaying scheme or in accordance with the L3 relaying scheme. The common QoS handling entity 414, dependent on whether the hybrid QoS flow 402 is associated with L2 relaying or L3 relaying maps the flow, in case of L3 relaying, to the PC5 radio bearer 410a, or in case of L2 relaying to the Uu radio bearer for U2N relaying or to the E2E PC5 radio bearer 410b for U2U relaying. The embodiment illustrated with reference to Fig. 12, in addition to implementing the hybrid QoS flow, which simplifies the data handling capability, further reduces the complexity as a common SDAP entity 414 is configured for handling both L2/L3 relaying. In the embodiment of Fig. 12, the SDAP layer 220 associated with the corresponding hybrid QoS flow 402 performs mapping to either the PC5 radio bearers 410a or to the Uu/E2E PC5 radio bearers 410b.

In accordance with embodiments, the apparatus 400 is configured with one or more hybrid QoS flows identified by different identifiers so that a packet may be mapped to the hybrid QoS flow providing the required transmission characteristics for transmitting the packet. In accordance with embodiments, the apparatus 400 may include a default hybrid QoS flow that may be configured via broadcasting, for example during a connection setup, so as to provide for an initial hybrid QoS flow that may be used for relaying packets. In accordance with further embodiments, in addition to the one or more default flows, also network configured flows may be provided that may be configured to the UE or apparatus by a UE-specific signaling. A packet to be relayed is mapped to the hybrid QoS flow fulfilling the transmission requirements, and the QoS flow, in turn, via the common QoS flow handling entity 414 is mapped to the appropriate radio bearer 410. In accordance with other embodiments, the UE may be configured with the hybrid QoS flow by a groupcast signaling, e.g., by a relay or a group-lead UE, or by a unicast signaling, e.g. by a relay UE. This configuration may be used during connection setup or while operating in a groupcast manner, e.g., when changing a service flow from a conventional flow to a hybrid flow in accordance with embodiments of the present invention. In accordance with other embodiments, the hybrid QoS flow may be configured using NAS signaling, for example from the AMF of the CN.

While, at the application layer 210, the data packets may be filtered into L2/L3 data, within a QoS flow, the packets need to be explicitly identified as L2 data or as L3 data so as to enable the SDAP entity 414 to map the traffic to the appropriate radio bearers 410. In accordance with embodiments, one or more of the QoS parameters in the QoS flow may be used for distinguishing or differentiating between L2 data and L3 data. For example, in case a certain parameter has a certain value within a certain range of values, this may indicate L2 data, while in case this parameter has a different value, the packet may be associated with L3 data. In accordance with embodiments, the allocation and retention priority, ARP, may be employed as the parameter for differentiating between packets associated with L2 data and packets associated with L3 data. For example, a specific set of ARP values may be allocated so as to indicate a packet associated with L2 data, while all other values for the ARP indicate the packet to be associated with L3 data.

In accordance with other embodiments, a threshold may be implemented, and all values for the ARP which are below the threshold, i.e., low values, may be associated with packets for L2 data, while values at or above the threshold, may indicate packets associated with L3 data. Actually, the inventive approach is not limited to the above examples, and the allocation of the values for the certain parameter, like the ARP to L2 data/L3 data may be the other way around. Also, other parameters than the ARP may be employed for differentiating L2/L3 data.

In accordance with other embodiments, the L2 relaying scheme and the L3 relaying scheme may both be used for relaying a data packet, thereby creating a data duplication, e.g., for implementing a high priority packets data duplication. Stated differently, a data packet may be duplicated, and one of the versions of the packet may be relayed using the L2 relaying scheme while the other one of the versions of the packet may be relayed using the L3 relaying scheme, thereby increasing the reliability of relaying the data packet. Duplicating the packet so as to obtain the respective versions of the packet may include a redundancy transmission, e.g., sending copies of the same data packet but encoded differently to increase redundancy. In accordance with such embodiments, for distinguishing or differentiating between L2 data and L3 data, among values the QoS parameters may take, a specific set of values indicates the data packet to be relayed to the destination using the first relaying scheme and the second relaying scheme, and the remaining values indicate the data packet to be relayed to the destination using either the first relaying scheme or the second relaying scheme. In accordance with other embodiments, values the QoS parameters may take are divided into a first set of values, e.g., lower values, and into a second set of values, e.g., higher values, the first set of values indicating that the data packet is to be relayed to the destination using the first relaying scheme and the second relaying scheme, and the second set of values indication that the data packet is to be relayed to the destination using either the first relaying scheme or the second relaying scheme.

In accordance with embodiments, the values of the QoS parameter(s) for differentiating between L2/L3 data may be assigned by the core network and provided, for example to the UE, via NAS signaling.

As mentioned above, at the transmitting entity, the higher layers may differentiate between L2/L3 data using certain QoS parameter values, like the ARP values. However, at the lower layers, like the AS layers, when requesting a relay UE which may support both L2 and L3 relaying, the relay UE needs to be aware of the type of relaying requested by the remote UE. In accordance with embodiments, this may be done by demarcating or distinguishing between L2 relaying and L3 relaying on the basis of a logical channel identification, LCID. For example, the RAN may assign certain LCIDs for L2 relaying and another set of LCIDs for L3 relaying so that, the relay UE, responsive to the logical channel ID, that is for example included in the MAC header of a transmission, is aware whether the associated packet is transmitted in accordance with L2 relaying or L3 relaying. The LCIDs may be provided using a UE-specific RRC signaling or by using a RAN-specific broadcast signaling.

As mentioned above, in accordance with embodiments of the present invention, the hybrid QoS flow may be implemented at the remote UE and/or the relay UE and/or at the RAN entity. However, in accordance with other embodiments, the relay UE may be either a UE operating in accordance with the L2 relaying scheme or a UE operating in accordance with the L3 relaying scheme, i.e. may not implement a hybrid QoS flow. In accordance with embodiments, the remote UE implementing the hybrid QoS flow may communicate with such L2 and L3 relays simultaneously or at the same time.

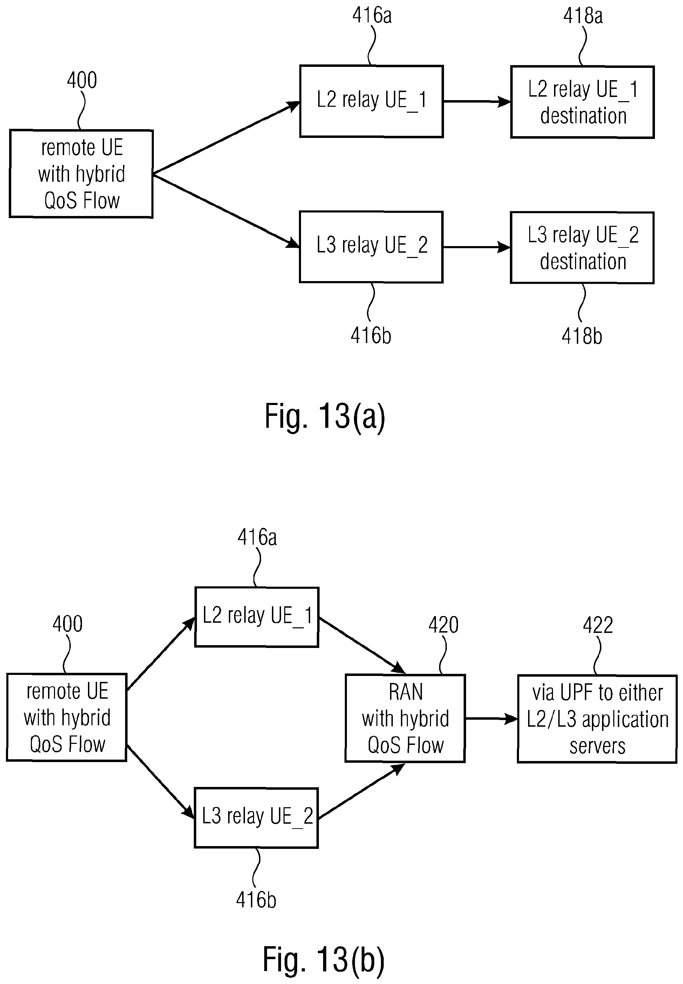

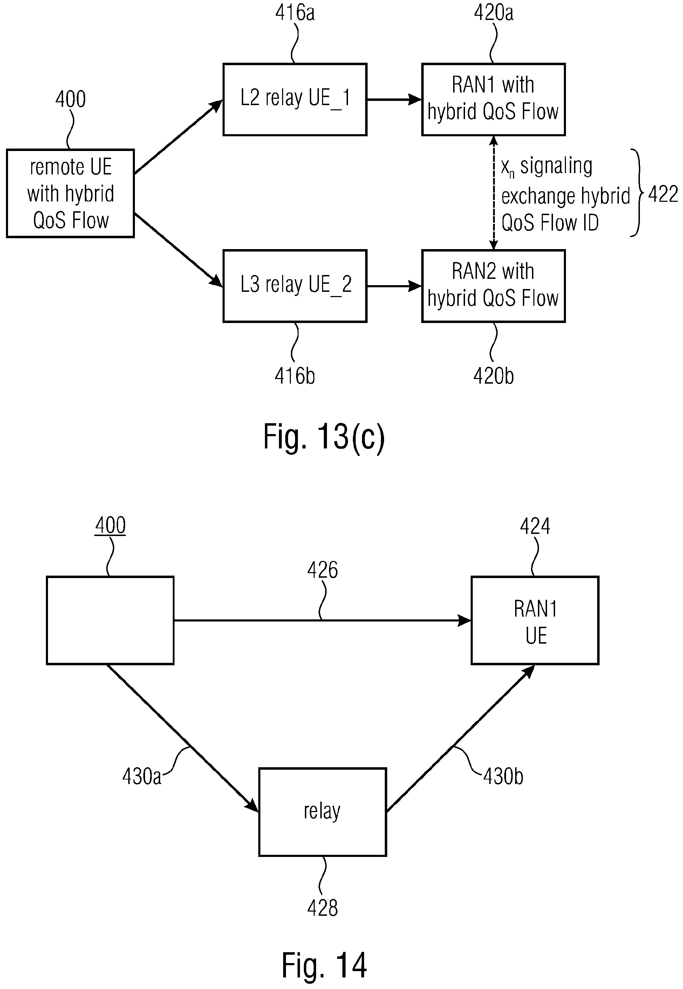

Fig. 13 illustrates embodiments in accordance with which a hybrid flow enables a remote UE to be connected to L2 and L3 relays concurrently. Fig. 13(a) illustrates U2U relaying using relay UEs supporting L2/L3 relaying. The remote UE 400 implementing the hybrid QoS flow in accordance with embodiments of the present invention, is connected concurrently to a L2 relay 416a and to a L3 relay 416b. The relays 416a and 416b are connected to respective destination UEs 418a and 418b.

Fig. 13(b) illustrates an embodiment for the U2N relaying using a common RAN entity. Again, remote UE 400 is concurrently connected to the relays 416a and 416b which, in turn, are connected to a RAN entity 420 implementing the hybrid QoS flow, like a base station of the RAN which, in turn, in connected to the application servers 422 for implementing L2/L3 applications. In the embodiment of Fig. 13(b), the RAN entity 420 implements also hybrid QoS flow and causes a mapping of the received hybrid QoS flow to the packets.

Fig. 13(c) illustrates the U2N relaying via the different relays to different RAN entities. Again, the remote UE 400 is concurrently connected to the relays 416a and 416b. Other than in Fig. 13(b), in the embodiment of Fig. 13(c), the relay UE 416a is connected to a first RAN entity 420a, while the second relay UE 416b is connected to a second RAN entity 420b. Both RAN entities 420a and 420b implement the hybrid QoS flow in accordance with embodiments of the present invention. The two RAN entities 420a and 420b are connected over the backhaul, like the Xn interface. For example, when considering a case where the remote UE is being served by Relay UE_1, the remote UE may switch from Relay UE_1 to Relay UE_2. In this case, the remote UE also switches from RAN1 to RAN2. Therefore, for maintaining continuity of the service, the RAN2 requires the hybrid QoS Flow ID to allow for seamless switch over.

In accordance with yet other embodiments, rather than connecting concurrently with two relay UEs, the remote UE may communicate concurrently directly with the destination, like the RAN or another UE and, in parallel, communicate with the destination using a relay UE. Fig. 14 illustrates such a dual connectivity embodiment in accordance with which a remote UE 400 implementing a hybrid QoS flow is connected to a destination 424 via a direct link 426. The destination 424 may be a RAN entity in case of U2N relaying or another UE in case of U2U relaying. Further, the remote UE 400 is connected via a relay 428 to the destination 424, i.e., in parallel to the direct connection or direct link 426 there is a relay link including a first hop 430a from the remote UE 400 to the relay 428 and a second hop 430b from the relay UE to the destination 424. The relay 428 may implement the hybrid QoS flow in accordance with embodiments of the present invention, however, in accordance with other embodiments, instead of using a single relay 428, also separate relays associated with L1/L2 relaying may be provided. Also, a multi-hop relay connection may be implemented.

The dual connectivity embodiments in accordance with Fig. 14 are advantageous as in case the direct link 426 deteriorates or brakes, the relay link 430a/430b is already established, thereby maintaining the connection between the remote UE 400 and the destination 424 despite problems on the direct link 426. For example, when considering a platooning use case, all vehicles may communicate directly with each other. For example, assuming a situation in which the remote UE 400 is the last vehicle in the platoon and the destination 424 is the first vehicle in the platoon, the direct link between the two vehicles is established which allows for a fast communication. However, in addition there may be the indirect link via an immediate vehicle implementing the relay 428 or via multiple intermediate vehicles in the platoon implementing a plurality of relay UEs 428 so that in certain situations in which the direct communication is interrupted or deteriorates, still, a reliable connection via the relay is ensured. This may happen, when considering the platooning use case, in a situation in which the platoon travels through a tunnel or around the corner so that the direct link 426 between the last vehicle and the first vehicle deteriorates or is interrupted.

When considering the U2N relaying scenarios, providing in addition to the direct link 426 to the RAN entity also the relay link may be advantageous in situations in which the UE 400 is located inside a car and is connected to a RAN entity via the direct link 426. To provide for a reliable connection in case the direct link deteriorates, for example, because the windows of the car within which the UE is located, are closed, the UE may connect via an on board unit of the car which acts as the relay 428 to the RAN entity 424.

Thus, in accordance with the embodiments described above with reference to Fig. 14, in case of a link failure, like a radio link failure, RLF, it is possible to quickly resume the hybrid QoS flow over the relay link, for example in case of a temporary connection loss on the direct link This is one possibility where the relay link is quickly resumed using the hybrid QoS flow if the direct link is compromised. Another scenario assumes a link between the remote UE and the destination (RAN or another UE) without a direct link. Thus, there are two links, a first link between the remote UE and the relay UE, and a second link between relay UE and the destination (RAN or another UE). If either the first or second link fails, i.e., an RLF is declared, the remote UE is forced to find another relay UE. In this case, the remote UE needs not to interact with the core network for additional information. It can simply resume the hybrid QoS flow from the last known state. This can also be shared with the new relay UE.

In accordance with further embodiments, the hybrid QoS flow may be adapted responsive to changes in the link conditions. For example, in case of changing channel or load conditions, for example due to changes in the channel quality, the relay load or the network load or after a handover, the hybrid QoS flow may be adapted by re-distributing the parameters among the different relay links, like the links from the remote UE to the relay UE and from the relay UE to the destination. For example, a PC5 link between the remote UE and the relay UE may be affected so that certain QoS parameters, like a delay or an error rate may no longer be maintained, However, it may turn out that the link from the relay UE to the destination, like the Uu link, may compensate for the shortcomings on the PC5 link. In such a situation, for example, the parameters associated with the delay and/or error rate may be re-distributed in the hybrid QoS flow among the Uu link and the PC5 link. In another embodiment, in case the Uu link degrades, a central entity may decide which among a plurality of PC5 links is to be maintained and which may be dropped. In accordance with other embodiments, some or all of the PC5 links may be modified so that more robust and efficient PC5 links are provided that allow for more packet loss and retransmissions on the Uu link.

In case a relay UE is changed, the new relay UE may support a QoS flow with higher or lower requirements so that, responsive to such a change in the QoS capabilities of a new relay UE, the hybrid QoS flow parameters may be split and reconfigured accordingly, so as to meet the overall QoS flow from the remote UE to the destination.

As mentioned above, in case the remote UE 400 determines that a connection to a relay UE no longer satisfies the required QoS parameters, the remote UE may initiate a change to another relay UE. On the other hand, in accordance with other embodiments, also the relay UE may perform a handover to another base station, for example a base station connected to a different core network entity or a base station connected to the same core network entity. In the former case, when the relay UE selects a new gNB that is connected to a different core network entity, like a new SMF, the UE context including the hybrid QoS flow characteristics may be transmitted from the old core network entity to the new core network entity. This may also be communicated to the new gNB. In case the relay UE selects a gNB connected to the same core network entity, the hybrid flow ID may be sent via the Xn interface to the target gNB. In accordance with further embodiments, a relay UE is provided implementing a QoS flow, either a QoS flow associated with L2 relaying or L3 relaying or the above-described hybrid QoS flow. In either case, the relay UE may provide its relay functionality to a plurality of remote UEs, i.e., the relay UE may receive a plurality of QoS flows, like a plurality of hybrid QoS flows.

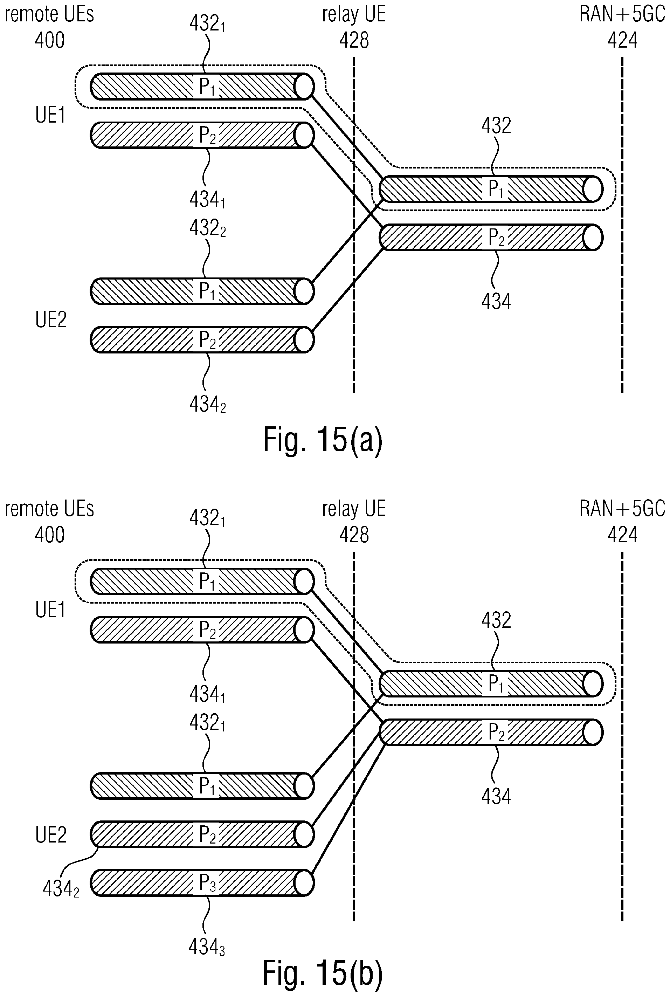

In accordance with embodiments, the relay UE may bundle the flows into a single flow to the destination. Fig. 15 illustrates embodiments of the present invention allowing the QoS bundling of QoS flows from a plurality of UEs to a destination. Fig. 15 illustrates a scenario in which remote UEs 400 are assumed that implement the above-described hybrid QoS flow, however, the UEs may also implement conventional QoS flows. The UE relay 428 relays the transmissions from the remote UEs to the destination 424 that, in the depicted example, is assumed to be the RAN and the 5GC, however, the bundling is also applicable when transmitting from a plurality of UEs to a destination which is a further UE (U2U relaying). Fig. 15(a) illustrates a one-to-one QoS flow bundling in accordance with embodiments. As is illustrated, the remote UEs UE1 and UE2 include first QoS flows 432₁ and 432₂ as well as second QoS flows 434₁ and 434₂. The relay UE 428 bundles the first QoS flows 432₁ and 432₂ into a single or common QoS flow 434 to the destination 424. Likewise, the UE 428 bundles the second QoS flows 434₁ and 434₂ into a single or common Uu flow 434 to the destination 424. For example, one of the flows may be a high priority flow while the other one is a default flow.

Fig. 15(b) shows many-to-one flow bundling in accordance with further embodiments. Similar as in Fig. 15(a), UE1 and UE2 provide the respective first and second flows 432₁, 432₂, 434₁ and 434₂. In addition, UE2 provides a third QoS flow 434₃. In accordance with the depicted embodiment, the relay UE bundles into the single or common flow 432 only the first QoS flows 432₁ and 432₂, while it bundles into the second flow 434 the second QoS flows 434₁, 434₂ and 434₂ from UE2. For example, all flows associated with a certain priority, like a priority above a certain level or above a default priority value, are bundled into the common QoS flow 432, while all other QoS flows associated with a lower priority are bundled into the flow 434.

Furthermore, a hybrid flow may transport layered services, for example containing one or more basic flow and one or more enhancement flows. Wherein the individual flows can be error protected differently, e.g. using unequal error protection or different relaying paths. One example where this can be applied is Extended Reality (XR)-services such as real- and-virtual combined environments and human-machine interactions e.g., generated by computer technology or wearables. This includes forms such as augmented reality (AR), mixed reality (MR) and virtual reality (VR) and can be applied in a wide variety of fields such as entertainment, marketing, real-estate, training and remote work.

In a wireless system, like then ones described above, an apparatus implementing the inventive approach, namely providing for an hybrid QoS flow, in accordance with further embodiments, may indicate that it supports the inventive approach, e.g., responsive to a query received from another entity the apparatus may indicate that it supports the hybrid QoS flow. In accordance with embodiments, the apparatus may signal support of the hybrid QoS flow by one or more of the following:
- a PC5-RRC - signaling,
- an RRC - signaling,
- a MAC signaling,
- a broadcasted via System Information,
- a signaling during an initial access, e.g., in any one of (Msg. 1 to- Msg. 4 during a 4-step RACH process or during 2-step RACH in Msg. A and/or Msg. B) during a 2-step RACH process.

In accordance with embodiments, a UE or a RAN entity or a CN entity may be queried if it supports the hybrid flow. As mentioned above, this may include any kind of signaling, e.g., during an initial access via RACH/PRACH, or on a higher layer, or over the top (OTT), so that
- a UE knows if a relay or gNB or CN supports this feature, and might or might not connect according to the support/not-support of the hybrid flow,
- a RAN or CN entity knows if a relaying entity supports the hybrid flow feature,
- a RAN or CN entity knows if a UE supports the hybrid flow feature, e.g., if a UE does not support the hybrid flow feature, the RAN or CN entity may decide to serve this UE differently.

### Multi-Hop Relays

In the embodiments described above, the end-to-end communication between the transmitting entity and the receiving entity is via a single relay that forwards the feedback from the receiving entity and/or that differentiates the traffic as described above. However, the present invention is not limited to such embodiments, rather, in accordance with further embodiments, the end-to-end communication between the transmitting entity and the receiving entity may be via a plurality of relays, also referred to as a set of relay UEs or as a chain of relay UEs.

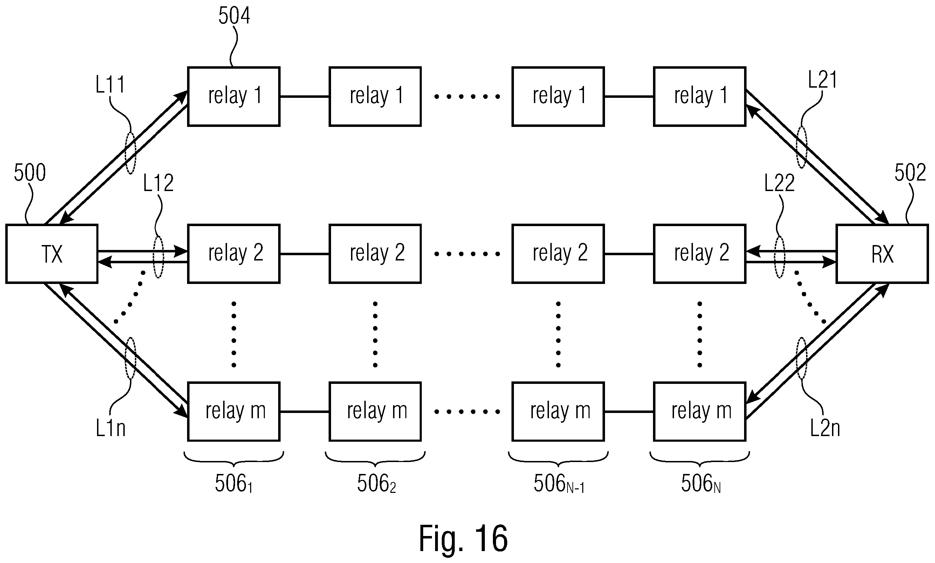

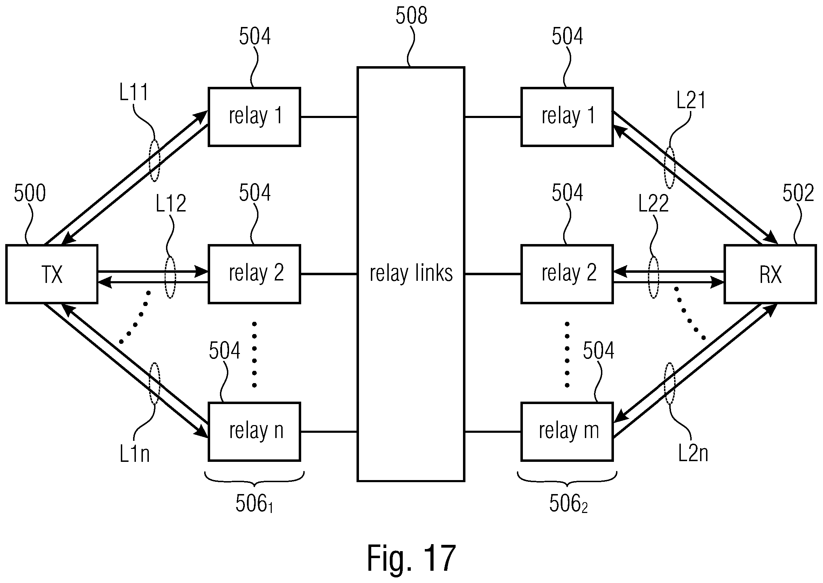

Fig. 16 illustrates an embodiment in accordance with which the communication between the transmitting entity 500 and the receiving entity 502 is using N relays 504, N ≥ 2. Each relay layer includes a plurality of relay devices 1 to m, like relay UEs. The respective relay layers 506₁ to 506_{N} may include the same number of relay UEs or some or all of the relay layers 506₁ to 506_{N} may include different numbers of relay UEs. The transmitting entity 500 may connect to the relays of the first relay layer 506₁, and the receiving entity 502 and may connect to the relays of the relay layer 506_{N}. Fig. 17 illustrates an embodiment employing N=2 relay layers for the end-to-end communication between the transmitting entity 500 and the receiving entity 502. The first relay layer 506₁ may include n UE relays 504. The receiving entity 502 may be connectable to a second relay layer 506₂, and the second relay layer 506₂ may include m UE relays 400. In accordance with embodiments, the respective relay layers 506₁, 506₂ may have the same number of relays, n=m. In accordance with other embodiments, the number of relays in the respective relay layers 506₁, 506₂ may be different, i.e., n≠m. The respective relays in the different relay layers 506₁, 506₂ may connect with each other, as is indicated, schematically, at 508. Some or all of the relays in the first relay layer 506, may connect with some or all of the relays in the second relay layer 506₂.

Embodiments of the present invention have been described in detail above, and the respective embodiments and aspects may be implemented individually or two or more of the embodiments or aspects may be implemented in combination. In other words, any of the above described embodiments of the first aspect concerning the provision of the overall feedback from the receiving entity to the transmitting entity via the one or more relays may be combined with any of the above described embodiments of the second aspect concerning the differentiation of the traffic at the one or more relays.

### General

Embodiments of the present invention have been described in detail above, and the respective embodiments and aspects may be implemented individually or two or more of the embodiments or aspects may be implemented in combination.

In accordance with embodiments, the wireless communication system may include a terrestrial network, or a non-terrestrial network, or networks or segments of networks using as a receiver an airborne vehicle or a space-borne vehicle, or a combination thereof.

In accordance with embodiments of the present invention, a user device comprises one or more of the following: a power-limited UE, or a hand-held UE, like a UE used by a pedestrian, and referred to as a Vulnerable Road User, VRU, or a Pedestrian UE, P-UE, or an on-body or hand-held UE used by public safety personnel and first responders, and referred to as Public safety UE, PS-UE, or an loT UE, e.g., a sensor, an actuator or a UE provided in a campus network to carry out repetitive tasks and requiring input from a gateway node at periodic intervals, a mobile terminal, or a stationary terminal, or a cellular loT-UE, or a vehicular UE, or a vehicular group leader (GL) UE, or a sidelink relay, or an loT or narrowband loT, NB-loT, device, or wearable device, like a smartwatch, or a fitness tracker, or smart glasses, or a ground based vehicle, or an aerial vehicle, or a drone, or a moving base station, or road side unit (RSU), or a building, or any other item or device provided with network connectivity enabling the item/device to communicate using the wireless communication network, e.g., a sensor or actuator, or any other item or device provided with network connectivity enabling the item/device to communicate using a sidelink the wireless communication network, e.g., a sensor or actuator, or any sidelink capable network entity.

In accordance with embodiments of the present invention, a network entity comprises one or more of the following: a macro cell base station, or a small cell base station, or a central unit of a base station, an integrated access and backhaul, IAB, node, or a distributed unit of a base station, or a road side unit (RSU), or a remote radio head, or an AMF, or an MME, or an SMF, or a core network entity, or mobile edge computing (MEC) entity, or a network slice as in the NR or 5G core context, or any transmission/reception point, TRP, enabling an item or a device to communicate using the wireless communication network, the item or device being provided with network connectivity to communicate using the wireless communication network.

Although some aspects of the described concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

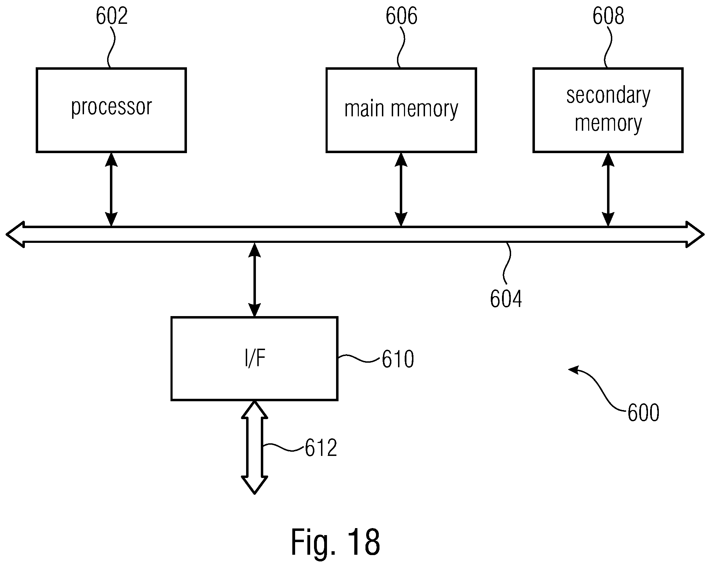

Various elements and features of the present invention may be implemented in hardware using analog and/or digital circuits, in software, through the execution of instructions by one or more general purpose or special-purpose processors, or as a combination of hardware and software. For example, embodiments of the present invention may be implemented in the environment of a computer system or another processing system. Fig. 18 illustrates an example of a computer system 600. The units or modules as well as the steps of the methods performed by these units may execute on one or more computer systems 600. The computer system 600 includes one or more processors 602, like a special purpose or a general-purpose digital signal processor. The processor 602 is connected to a communication infrastructure 604, like a bus or a network. The computer system 600 includes a main memory 606, e.g., a random-access memory, RAM, and a secondary memory 608, e.g., a hard disk drive and/or a removable storage drive. The secondary memory 608 may allow computer programs or other instructions to be loaded into the computer system 600. The computer system 600 may further include a communications interface 610 to allow software and data to be transferred between computer system 600 and external devices. The communication may be in the from electronic, electromagnetic, optical, or other signals capable of being handled by a communications interface. The communication may use a wire or a cable, fiber optics, a phone line, a cellular phone link, an RF link and other communications channels 612.

The terms "computer program medium" and "computer readable medium" are used to generally refer to tangible storage media such as removable storage units or a hard disk installed in a hard disk drive. These computer program products are means for providing software to the computer system 600. The computer programs, also referred to as computer control logic, are stored in main memory 606 and/or secondary memory 608. Computer programs may also be received via the communications interface 610. The computer program, when executed, enables the computer system 600 to implement the present invention. In particular, the computer program, when executed, enables processor 602 to implement the processes of the present invention, such as any of the methods described herein. Accordingly, such a computer program may represent a controller of the computer system 600. Where the disclosure is implemented using software, the software may be stored in a computer program product and loaded into computer system 600 using a removable storage drive, an interface, like communications interface 610.

The implementation in hardware or in software may be performed using a digital storage medium, for example cloud storage, a floppy disk, a DVD, a Blue-Ray, a CD, a ROM, a PROM, an EPROM, an EEPROM or a FLASH memory, having electronically readable control signals stored thereon, which cooperate or are capable of cooperating with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention may be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier. In other words, an embodiment of the inventive method is, therefore, a computer program having a program code for performing one of the methods described herein, when the computer program runs on a computer.

A further embodiment of the inventive methods is, therefore, a data carrier or a digital storage medium, or a computer-readable medium comprising, recorded thereon, the computer program for performing one of the methods described herein. A further embodiment of the inventive method is, therefore, a data stream or a sequence of signals representing the computer program for performing one of the methods described herein. The data stream or the sequence of signals may for example be configured to be transferred via a data communication connection, for example via the Internet. A further embodiment comprises a processing means, for example a computer, or a programmable logic device, configured to or adapted to perform one of the methods described herein. A further embodiment comprises a computer having installed thereon the computer program for performing one of the methods described herein.

In some embodiments, a programmable logic device, for example a field programmable gate array, may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein are apparent to others skilled in the art. It is the intent, therefore, to be limited only by the scope of the impending patent claims and not by the specific details presented by way of description and explanation of the embodiments herein.

## Claims

1. An apparatus for a wireless communication network,
wherein the apparatus is to act as a relaying entity so as to provide functionality to support connectivity between one or more sources and a destination of the wireless communication network, wherein a connection between the source and the destination comprises one or more sidelinks,
wherein the apparatus is to connect via a sidelink to one or more of the following:
• the source, like one or more of the remote UEs,
• the destination,
• one or more further relay devices, and
wherein the apparatus is to map a data packet to be relayed to a hybrid Quality of Service, QoS, flow between the source and the destination, the hybrid QoS flow including QoS parameters for the first relaying scheme and for the second relaying scheme, the first relaying scheme establishing a first QoS flow between the apparatus and the destination, and the second relaying scheme establishing a second QoS flow between the apparatus and the relay device.

2. The apparatus of claim 1, wherein the apparatus is connected to a plurality of sources and is to bundle QoS flows between the sources and the apparatus into one or more bundled QoS flows between the apparatus and the destination.

3. An apparatus for a wireless communication network,
wherein the apparatus is to transmit a data packet to a destination in the wireless communication network via one or more relay devices using a first relaying scheme, like layer 2, L2, relaying, or using a second relaying scheme, like layer 3, L3, relaying, and
wherein the apparatus is to map the data packet to a hybrid Quality of Service, QoS, flow between the apparatus and the destination, the hybrid QoS flow including QoS parameters for the first relaying scheme and for the second relaying scheme.

4. The apparatus of claim 3, wherein the first relaying scheme is to establish a first QoS flow between the apparatus and the destination, and the second relaying scheme is to establish a second QoS flow between the apparatus and the relay device.

5. The apparatus of claim 3 or 4, wherein, dependent on whether the data packet is to be relayed to the destination using the first relaying scheme or using the second relaying scheme, the apparatus is to map the hybrid QoS flow to a first radio bearer for a link to the destination or to a second radio bearer for a link to the relay device.

6. The apparatus of any one of claims 3 to 5, wherein the apparatus is a user device, UE, and wherein the UE is configured with the hybrid QoS flow by one or more of the following:
• a broadcast signaling, e.g., during a connection setup,
• a groupcast signaling, e.g., by a relay or a group-lead UE,
• a unicast signaling, e.g., by a relay UE,
• the network via apparatus-specific signaling, e.g., via a Non Access Stratum, NAS, signaling from a core network, CN, entity of the wireless communication network, like the Access and Mobility Management Function, AMF, of the CN.

7. The apparatus of any one of claims 3 to 6, wherein the apparatus is a user device, UE, and wherein the UE is to receive respective values of the QoS parameter from a core network, CN, of the wireless communication network via a Non Access Stratum, NAS, signaling.

8. The apparatus of any one of claims 3 to 6, wherein the apparatus is to perform a handover from a current relay device to a new relay device supporting the current relaying scheme or a hybrid QoS flow responsive to a certain event, e.g., a radio link failure, RLF, on the link between the apparatus and the relay device, or in case the current relay device does not support a current relaying scheme by which the data packet is to be relayed.

9. The apparatus of any one of claims 3 to 8, wherein the apparatus is to connect at the same time to a first relay device operating in accordance with the first relaying scheme and to a second relay device operating in accordance with the second relaying scheme.

10. The apparatus of claim 9, wherein the apparatus is a user device, UE, and wherein the UE is connected via the first relay device to a first destination UE supporting the first relaying scheme, and to via the second relay device to a second destination UE supporting the second relaying scheme.

11. The apparatus of claim 9, wherein the apparatus is a user device, UE, and wherein the UE is connected via the first and second relay devices to a destination Radio Access Network, RAN, entity, like a base station, supporting a hybrid QoS, wherein the RAN entity may be connected to an application server.

12. The apparatus of claim 9, wherein the apparatus is a user device, UE, and wherein the UE is connected via the first relay device to a first destination Radio Access Network, RAN, entity, like a base station UE supporting the first relaying scheme or a hybrid QoS flow, and via the first relay device to a second destination RAN entity for a data packet transmission according to a second relay device supporting the second relaying scheme or a hybrid QoS flow, wherein the first and second RAN entities communicate over a backhaul, e.g., for exchanging a QoS flow ID.

13. The apparatus of any one of claims 3 to 12, wherein the apparatus is to connect at the same time to the destination directly and via the relay device.

14. The apparatus of claim 12 or 13, wherein, in case of a link failure, RLF, on the direct link or on the relay link, the apparatus, e.g., in case of a temporary connection loss, the apparatus is to resume the hybrid QoS flow over the link not affected by the RLF.

15. The apparatus of any one of the preceding claims, wherein the apparatus is configured with a common QoS flow handling entity, like a Service Data Adaptation Protocol, SDAP, entity, for mapping the hybrid QoS flow to the first radio bearer or to the second radio bearer for a link to the relay device.

16. The apparatus of any one of the preceding claims, wherein the hybrid QoS flow includes QoS parameters associated with a QoS flow for a Uu communication and QoS parameters associated with a QoS flow of a sidelink communication.

17. The apparatus of claim 16,
wherein the QoS parameters for the Uu communication comprises one or more of the following:
• a 5G QoS Identifier, 5QI, identifying one or more QoS characteristics
• an Allocation and Retention Priority, ARP
• a Reflective QoS Attribute, RQA,
wherein the QoS parameters for the sidelink communication comprises one or more of the following:
• a PC5 5G QoS Identifier, PC5 5QI, identifying one or more QoS characteristics,
• one or more PC5 Flow Bit Rates,
• one or more PC5 Link Aggregated Bit Rates,
• a range, like a required communication range,
• an aggregated delay,
• an aggregated jitter, and
wherein the one or more QoS characteristics comprises one or more of the following:
• a resource type,
• a priority level,
• a packet delay budget,
• a packet error rate,
• a default maximum data burst volume,
• a default averaging window.

18. The apparatus of any one or the preceding claims, wherein, within the hybrid QoS flow, the data packet is explicitly identified as a data packet is to be relayed to the destination using the first relaying scheme or using the second relaying scheme, using one or more of the QoS parameters, like the Allocation and Retention Priority, ARP.

19. The apparatus of claim 18, wherein
one or more first values of the QoS parameter indicate the data packet to be relayed to the destination using the first relaying scheme, and one or more second values of the QoS parameter indicate the data packet to be relayed to the destination using the second relaying scheme, or
among values the QoS parameters may take, a specific set of values indicates the data packet to be relayed to the destination using the first relaying scheme, and the remaining values indicate the data packet to be relayed to the destination using the second relaying scheme, or
values the QoS parameters may take are divided into a first set of values, e.g., lower values, and into a second set of values, e.g., higher values, for indicating that the data packet is to be relayed to the destination using the first relaying scheme and the second relaying scheme, respectively, or
among values the QoS parameters may take, a specific set of values indicates the data packet to be relayed to the destination using the first relaying scheme and the second relaying scheme, and the remaining values indicate the data packet to be relayed to the destination using either the first relaying scheme or the second relaying scheme, or values the QoS parameters may take are divided into a first set of values, e.g., lower values, and into a second set of values, e.g., higher values, the first set of values indicating that the data packet is to be relayed to the destination using the first relaying scheme and the second relaying scheme, and the second set of values indication that the data packet is to be relayed to the destination using either the first relaying scheme or the second relaying scheme.

20. The apparatus of claim 19, wherein the apparatus is to receive respective values of the QoS parameter from a core network, CN, of the wireless communication network via a Non Access Stratum, NAS, signaling.

21. The apparatus of any one or the preceding claims, wherein
the apparatus is configured or preconfigured with first Logical Channel ID, LCID, for the first relaying scheme, and with a second LCID for the second relaying scheme, and
the apparatus is to identify a logical channel for the first relaying scheme carried in a Medium Access Control, MAC, header by the first LCID, a logical channel for the second relaying scheme carried in the MAC header by the second LCID.

22. An apparatus for a wireless communication network,
wherein the apparatus is to receive a data packet from a destination in the wireless communication network via one or more relay devices using a first relaying scheme, like layer 2, L2, relaying, or using a second relaying scheme, like layer 3, L3, relaying, and
wherein the apparatus is to map the received data packet to a hybrid Quality of Service, QoS, flow between the apparatus and the destination, the hybrid QoS flow including QoS parameters for the first relaying scheme and for the second relaying scheme, the first relaying scheme establishing a first QoS flow between the apparatus and the destination, and the second relaying scheme establishing a second QoS flow between the apparatus and the relay device.

23. The apparatus of claim 3 or 22, wherein
the apparatus is a user device, UE, and is to connect to the relay device over the sidelink, and the destination comprises a further UE or an entity of the core network or the radio access network, RAN, of the wireless communication network, or
the apparatus is a RAN entity and is to connect to the relay device over the Uu link, and the destination comprises a user device UE.

24. The apparatus of claim 23, wherein the user device comprises one or more of the following: a mobile terminal, or a stationary terminal, or a cellular loT-UE, or a vehicular UE, or a leader, GL, UE, or an loT or narrowband loT, NB-loT, device, or wearable device, like a smartwatch, or a fitness tracker, or smart glasses, or a ground based vehicle, or an aerial vehicle, or a drone, or a moving base station, or road side unit, RSU, or a building, or any other item or device provided with network connectivity enabling the item/device to communicate using the wireless communication network, e.g., a sensor or actuator, or any other item or device provided with network connectivity enabling the item/device to communicate using a sidelink the wireless communication network, e.g., a sensor or actuator, or any sidelink capable network entity.

25. The apparatus of claim 23 or 24, wherein the entity of the core network or the radio access network comprises one or more of the following: a macro cell base station, or a small cell base station, or a central unit of a base station, or a distributed unit of a base station, or a road side unit, RSU, or an AMF, or an MME, or an SMF, or a core network entity, or mobile edge computing, MEC entity, or a network slice as in the NR or 5G core context, or any transmission/reception point, TRP, enabling an item or a device to communicate using the wireless communication network, the item or device being provided with network connectivity to communicate using the wireless communication network.

26. An apparatus for a wireless communication network,
wherein the apparatus is to act as a relaying entity so as to provide functionality to support connectivity between one or more sources and a destination of the wireless communication network, wherein a connection between the source and the destination comprises one or more sidelinks, and
wherein the source and/or the destination comprises an apparatus of claim 3 or 22.

27. The apparatus of claim 25, wherein the apparatus is to connect via a sidelink to one or more of the following:
• the source, like one or more remote UEs,
• the destination,
• one or more further relay devices.

28. An apparatus for a wireless communication network,
wherein the apparatus is to act as a relaying entity so as to provide functionality to support connectivity between one or more sources and a destination of the wireless communication network, wherein a connection between the source and the destination comprises one or more sidelinks,
wherein the apparatus is to connect via a sidelink to one or more of the following:
• the source, like one or more of the remote UEs,
• the destination,
• one or more further relay devices, and
wherein the apparatus is connected to a plurality of sources and is to bundle QoS flows between the sources and the apparatus into one or more bundled QoS flows between the apparatus and the destination.

29. The apparatus of claim 26 or 28, wherein the apparatus is to bundle
first QoS flows between the sources and the apparatus into a first common QoS flow between the apparatus and the destination, the first QoS flows being associated with a certain QoS parameter, e.g., a first priority or a priority at or exceeding a priority threshold, and
second QoS flows between the sources and the apparatus into a second common QoS flow between the apparatus and the destination, the second QoS flows being associated with the certain QoS parameter, e.g., a second priority or a priority below the priority threshold.

30. A wireless communication network, comprising
one or more first devices according to any one of claims 1 to 22,
one or more second devices according to any one of claims 1 to 22, and
wherein the first and second devices are connected via one or more relay devices according to any one of claims 23 to 29 for providing functionality to support connectivity between the first and second devices.

31. The wireless system according to claim 30, wherein at least one or more of the first or second devices indicate their support of any of the features of claims 1 to 26, e.g., responsive to a query received from another entity support of the hybrid QoS flow is indicated.

32. The wireless system according to claim 31, wherein support of the hybrid QoS flow is indicated by a signaling, the signaling comprising one or more of the following:
• a PC5-RRC - signaling,
• an RRC - signaling,
• a MAC signaling,
• a broadcast via System Information,
• a signaling during an initial access, e.g., in any one of Msg. 1 to Msg. 4 during a 4-step RACH process or in Msg. A and/or Msg. B during a 2-step RACH process.

33. The wireless communication network of claim 32, wherein
the first device comprises a user device, UE, and the second device comprises a RAN entity, like a base station,
responsive to the relay device performing a handover, HO, from a current RAN entity connected to a first core network entity to a new RAN entity connected to a second core network entity, the wireless communication network is to the transfer a UE context containing characteristics of the hybrid QoS flow from the first core network entity to the second core network entity and to the second RAN entity, or
responsive to the relay device performing a handover, HO, from a current RAN entity connected to a first core network entity to a new RAN entity also connected to the first core network entity, the wireless communication network is to the transfer a UE context containing characteristics of the hybrid QoS flow from the current RAN entity to the new RAN entity, e.g., using a backhaul interface, like the Xn interface.

34. The wireless communication network of any one of claims 30 to 33, wherein responsive to
• a change of one or more properties on a first link between the first device and the relay and/or on a second link between the relay device and the second device, like changes in channel quality, relay or network load, or
• a handover, or
• a change of the relay device,
the wireless communication network is to redistribute one or more of the QoS parameters of the hybrid QoS flow between the first and second links.

35. The wireless communication network of any one of claims 30 to 34, comprising
• one or more single-hop connections between the first device, like a remote UE, and the second device, like the destination, and/or
• one or more multi-hop connections between the first device, like a remote UE, and the second device, like the destination.

36. A method for operating an apparatus of a wireless communication network, the method comprising:
transmitting a data packet to a destination in the wireless communication network via one or more relay devices using a first relaying scheme, like layer 2, L2, relaying, or using a second relaying scheme, like layer 3, L3, relaying, and
mapping the data packet to a hybrid Quality of Service, QoS, flow between the apparatus and the destination, the hybrid QoS flow including QoS parameters for the first relaying scheme and for the second relaying scheme.

37. A method for operating an apparatus of a wireless communication network, the method comprising:
receiving a data packet from a destination in the wireless communication network via one or more relay devices using a first relaying scheme, like layer 2, L2, relaying, or using a second relaying scheme, like layer 3, L3, relaying, and
mapping the received data packet to a hybrid Quality of Service, QoS, flow between the apparatus and the destination, the hybrid QoS flow including QoS parameters for the first relaying scheme and for the second relaying scheme, the first relaying scheme establishing a first QoS flow between the apparatus and the destination, and the second relaying scheme establishing a second QoS flow between the apparatus and the relay device.

38. A method for operating an apparatus of a wireless communication network, wherein the apparatus is to act as a relaying entity so as to provide functionality to support connectivity between one or more sources and a destination of the wireless communication network, wherein a connection between the source and the destination comprises one or more sidelinks, the method comprising:
connecting via a sidelink to one or more of the following:
• the source, like one or more of the remote UEs,
• the destination,
• one or more further relay devices, and
mapping a data packet to be relayed to a hybrid Quality of Service, QoS, flow between the source and the destination, the hybrid QoS flow including QoS parameters for the first relaying scheme and for the second relaying scheme, the first relaying scheme establishing a first QoS flow between the apparatus and the destination, and the second relaying scheme establishing a second QoS flow between the apparatus and the relay device.

39. A method for operating an apparatus of a wireless communication network, wherein the apparatus is to act as a relaying entity so as to provide functionality to support connectivity between one or more sources and a destination of the wireless communication network, wherein a connection between the source and the destination comprises one or more sidelinks, the method comprising:
connecting via a sidelink to one or more of the following:
• the source, like one or more of the remote UEs,
• the destination,
• one or more further relay devices, and
connecting to a plurality of sources and bundling QoS flows between the sources and the apparatus into one or more bundled QoS flows between the apparatus and the destination.

40. A non-transitory computer program product comprising a computer readable medium storing instructions which, when executed on a computer, perform the method of any one of clams 36 to 39.
